# EUROPÄISCHE PATENTSCHRIFT

(11) **EP 2 410 009 B1**
(45) Veröffentlichungstag und Bekanntmachung des Hinweises auf die Patenterteilung: **06.03.2013**
(21) Anmeldenummer: 10170324.7
(22) Anmeldetag: 21.07.2010
(51) Int. Cl.: C08K 5/53, C07F 9/48, C07F 9/572, C07F 9/59

(54) **Reglermolekül**
Polymerization regulator
Molécule de régulateur

(43) Veröffentlichungstag der Anmeldung: 25.01.2012
(73) Patentinhaber: Sika Technology AG, 6340 Baar (CH)
(72) Erfinder: Sulser, Ueli, 8103, Unterengstringen (CH); Frunz, Lukas, 8057, Zürich (CH); Zimmermann, Jörg, 8046, Zürich (CH)
(74) Vertreter: Sika Patent Attorneys

(56) Entgegenhaltungen:
- EP-A1- 1 731 559
- US-A1- 2009 080 079

## Beschreibung

### Technisches Gebiet

Die Erfindung betrifft das Gebiet der Herstellung von Polymeren durch radikalische Polymerisation.

### Stand der Technik

Es ist bekannt, Phosphinsäure und ihre Salze als Molekulargewichtsregler einzusetzen, siehe z.B US2009/080079, EP1731 559, WO2006 050 472, ihre Verwendung hat jedoch Nachteile. So ergeben sie bei ihrer Verwendung mehrere unerwünschte, zum Teil giftige Nebenprodukte, wie beispielsweise Phosphin bei erhöhten Temperaturen, Additionsreaktionen laufen zum Teil nicht vollständig ab und zudem ergeben sie Polymere mit sehr uneinheitlichem Polymerisationsgrad.

In der Praxis werden auch schwefelhaltige anorganische und organische Verbindungen als Molekulargewichtsregler eingesetzt, wie beispielsweise Mercaptane, Mercaptoethanol, Thioglykol, Mercaptopropionsäure, Thiocarbamate und Cystein.

Schwefelhaltige Substanzen sind dahingehend von Nachteil, dass sie während der Polymerisation schwierig zu handhaben sind und aufgrund ihres unangenehmen Geruchs, insbesondere bei höheren Temperaturen, das Herstellungsverfahren und die Gebrauchseigenschaften der mit diesen Verbindungen hergestellten Produkte beeinträchtigen.

Weiter haben die bisher im Stand der Technik eingesetzten niedermolekularen Regler wie beispielsweise Phosphit oder Sulfit den Nachteil, dass die während der Reaktion aus den Reglern gebildeten Salze nur bedingt löslich sind und daher aus hochkonzentrierten Lösungen ausfallen.

### Darstellung der Erfindung

Es war daher Aufgabe der vorliegenden Erfindung, Molekulargewichtsregler bereitzustellen, die die erwähnten Nachteile nicht aufweisen und bei radikalischen Polymerisationen eingesetzt werden können.

Überraschenderweise wurde nun gefunden, dass eine monosubstituierte Phosphinsäure der Formel (I) gemäss Anspruch 1 diese Aufgabe löst. Der Einsatz der erfindungsgemässen monosubstituierten Phosphinsäure als Regler in radikalischen Polymerisationen führt nicht zur Bildung von schlechtlöslichen Salzen, ferner weisen sich die durch den erfindungsgemässen Regler hergestellten Polymere durch einen einheitlichen Polymerisationsgrad mit einer engen Grössenverteilung aus.

Weiter wurde ein kostengünstiges und technisch einfaches Verfahren zur Herstellung der erfindungsgemässen monosubstituierten Phosphinsäure mit hohen Ausbeuten gefunden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft monosubstituierte Phosphinsäuren der Formel (I) 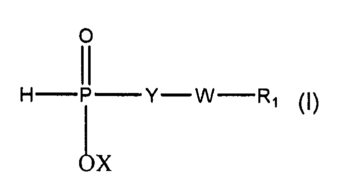 wobei **X** für H⁺, Alkalimetallion, Erdalkalimetallion, zwei- oder dreiwertiges Metallion, Ammoniumion, organische Ammoniumgruppe oder einen organischen Rest mit einem Molekulargewicht von ≤ 200 g/mol steht, insbesondere steht **X** für Na⁺ oder K⁺.

Hierbei steht **Y** für eine der Formeln (II) bis (VI) 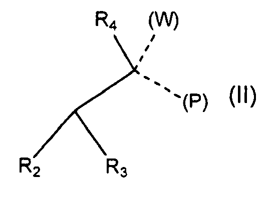 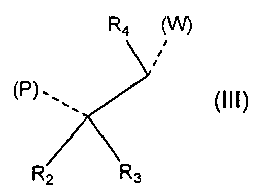 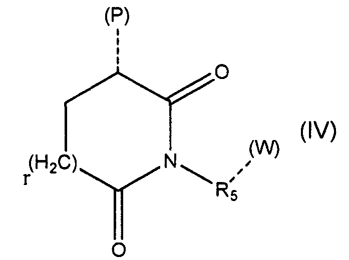 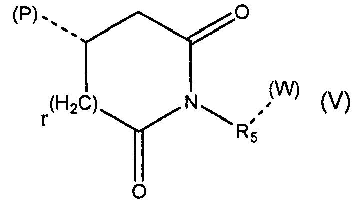 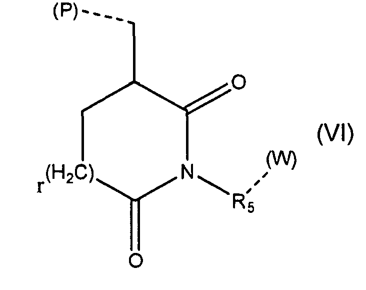 und **W** steht für eine der Formeln (VII) bis (X)

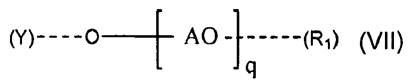

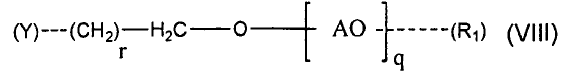

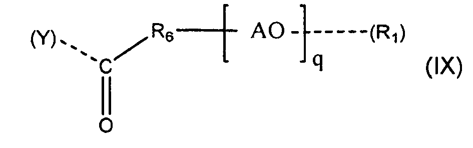

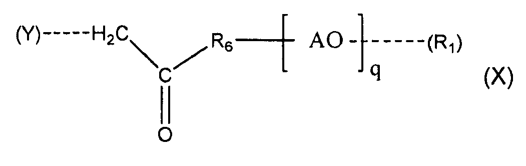

R₁ steht für H, eine Alkylgruppe, vorzugsweise mit 1-20 Kohlenstoffatomen, eine Alkylarylgruppe, vorzugsweise mit 7 - 20 Kohlenstoffatomen, oder die Formel (XI) 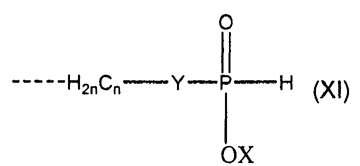
wobei der Substituent A unabhängig voneinander für eine C₂- bis C₄-Alkylengruppe, der Index q einen Wert von 2 bis 300, insbesondere von 2 bis 50, besonders bevorzugt von 3 bis 10, darstellt, der Index n einen Wert von 2 bis 4, vorzugsweise einen Wert von 2, darstellt, der Index r einen Wert von 0 bis 1 darstellt,
wobei R₂, R₃ und R₄ unabhängig voneinander für H, CH₃, COOH oder CH₂-COOH stehen. Es ist dem Fachmann klar, dass in diesem Zusammenhang unter COOH oder CH₂-COOH auch deren Salze mit Alkalimetallionen, Erdalkalimetallionen, zwei- oder dreiwertigen Metallionen oder Ammoniumionen, wie beispielsweise COO⁻Na⁺ oder CH₂-COO⁻Na⁺, verstanden werden.
R₅ steht für -CH₂-CH₂- oder -CH₂-CH(CH₃)- und
R₆ steht für O oder N.

Vorzugsweise steht [AO] für die Formel (XV)

[(EO)ₓ-(PO)_{y}-(BuO)_{z}] (XV)

Die Indices x, y, z stellen hierbei unabhängig voneinander je die Werte 0 - 300 und deren Summe x+y+z ist 2 - 300. Weiterhin bedeutet in Formel (XV) EO=Ethylenoxy, PO=Propylenoxy, BuO=Butylenoxy oder Isobutylenoxy. Die Abfolge der einzelnen Struktureinheiten EO-, PO-, BuO kann alternierend, statistisch, blockweise oder zufällig sein.

Vorzugsweise ist der Indices x von 2 bis 50, besonders bevorzugt von 3 bis 15 und die Summe y+z = 0.

Unter "Molekulargewicht" oder "Molgewicht" versteht man im Sinne der Erfindung das mittlere Molekulargewichtsmittel Mw.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können.

Die fett markierten Bezeichnungen wie **X**, **W**, **Y**, **Y'**, **P**, **M** und dergleichen im vorliegenden Dokument dienen lediglich für das bessere Leseverständnis und Identifizierung.

Handelt es sich bei **X** um eine organische Ammoniumgruppe, so handelt es sich vorzugsweise um ein aliphatisches Amin oder ein hydroxyaliphatisches Amin, insbesondere ein Mono-, Di- oder Trialkylamin wie beispielsweise Methyl-, Ethyl-, oder Diethylamin, oder ein Mono-, Di- oder Tri-(hydroxyalkyl)-amin wie beispielsweise Ethanolamin, Di- oder Triethanolamin, Tris-(hydroxymethyl)methylamin oder N-(Hydroxyethyl)-N,N-di-ethylaminen.

Handelt es sich bei **X** um einen organischen Rest mit einem Molekulargewicht von ≤ 200 g/mol, so handelt es sich vorzugsweise um eine C₁- bis C₂₀-Alkylgruppe oder einen Rest enthaltend Alkylenoxid, mit einem Molekulargewicht von ≤ 200 g/mol.

Bevorzugt handelt es sich bei der Verbindung der Formel (I) 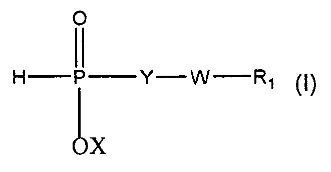 um eine Verbindung mit
**X** = H⁺ oder Na⁺
einem **W** der Formel (VII)
einem **Y** der Formel (III),
R₁ = H oder CH₃
R₂ = R₃ = R₄ = H
wobei die Indices x = 14-15 und y = z = 0 sind.
oder
um eine Verbindung mit
**X** = H⁺ oder Na⁺
einem **W** der Formel (VII)
einem **Y** der Formel (III),
R₁ = H oder CH₃
R₂ = R₃ = R₄ = H
wobei die Indices x = 13-14 und y = 0 und z = 1 sind.
oder
um eine Verbindung mit
**X** = H⁺ oder Na⁺
einem **W** der Formel (VIII)
einem **Y** der Formel (III),
R₁ = H oder CH₃
R₂ = R₃ = R₄ = H
wobei die Indices x = 2-8 und y = z = 0 sind.
oder
um eine Verbindung mit
**X** = H⁺ oder Na⁺
einem **W** der Formel (VIII)
einem **Y** der Formel (III),
R₁ = H oder CH₃
R₂ = R₃ = R₄ = H
wobei die Indices x = 3-10 und y = z = 0 sind.
oder
um eine Verbindung mit
**X** = H⁺ oder Na⁺
einem **W** der Formel (VIII)
einem **Y** der Formel (III),
R₁ = H oder CH₃
R₂ = R₃ = R₄ = H
wobei die Indices x = 9-11 und y = z = 0 sind.
oder
um eine Verbindung mit
**X** = H⁺ oder Na⁺
einem **W** der Formel (VIII)
einem **Y** der Formel (III),
R₁ = H oder CH₃
R₂ = R₃ = R₄ = H
wobei die Summe der Indices x+y = 20 ist und z = 0 ist.
oder
um eine Verbindung mit
**X** = H⁺ oder Na⁺
einem **W** der Formel (IX)
einem **Y** der Formel (III),
R₁ = H oder CH₃
R₂ = H, R₃ = H oder CH₃, R₄ = COOH oder COO⁻ Na⁺,
wobei die Indices x = 2-8 und y = z = 0 sind.

Besonders bevorzugt handelt es sich bei der Verbindung der Formel (I) 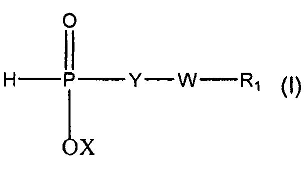 um eine Verbindung ausgewählt aus der Gruppe bestehend aus:
Natrium[poly(oxyethylen)]-phosphinat, vorzugsweise mit einem Molekulargewicht von 400-600 g/mol, Natrium-2-[poly(oxyethylen)-1,4-dioxybutylen]ethylphosphinat, vorzugsweise mit einem Molekulargewicht von 400-600 g/mol, Natrium-3-[methyl-poly(oxyethylen)-oxy-]propylphosphinat (Alkoxylierungsgrad: 2-8 EO), vorzugsweise mit einem Molekulargewicht von 250-500 g/mol, Natrium-3-[methyl-poly(oxyethylen)-oxy-]propylphosphinat (Alkoxylierungsgrad: 3-10 EO), vorzugsweise mit einem Molekulargewicht von 300-550 g/mol, Natrium-3-[methyl-poly(oxyethylen)-oxy-]propylphosphinat (Alkoxylierungsgrad: ca. 10 EO), vorzugsweise mit einem Molekulargewicht von 500-600 g/mol, Natrium-3-[methyl-poly(oxyethylen)-oxy-]propylphosphinat (Alkoxylierungsgrad: ca. 24 EO), vorzugsweise mit einem Molekulargewicht von 1100-1200 g/mol, Natrium-3-[methyl-poly(oxyethylenoxypropylen)-oxy-]propylphosphinat (Alkoxylierungsgrad: ca. 20 EO und ca. 20 PO), vorzugsweise mit einem Molekulargewicht von 1500-2200 g/mol.

In einem weiteren Aspekt betrifft die vorliegende Erfindung ein Verfahren zur Herstellung einer monosubstituierten Phosphinsäure durch Umsetzung einer Phosphinsäure der Formel (XII) 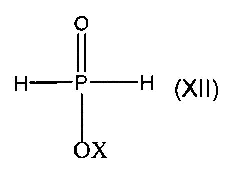 mit einer Verbindung der Formel (XIII)

Y'-W-R₁ (XIII)

wobei Y' für eine Verbindung der Formel (III') bis (VI') steht 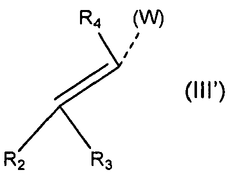 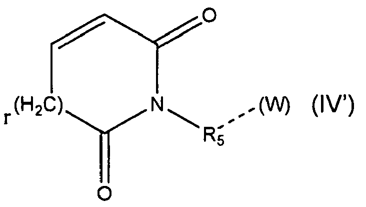 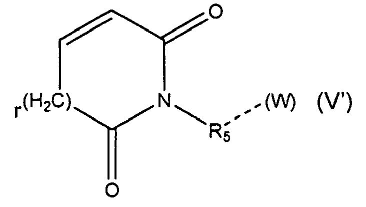 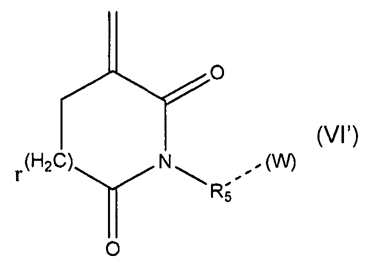 und wobei **W**, R₁-R₅. **X** und r für Reste, respektive Index, stehen, wie sie vorgehend als Reste, respektive Index für **W**, R₁-R₅, **X** und r beschrieben sind, in Gegenwart eines Radikalinitiators.

Vorzugsweise handelt es sich bei der Umsetzung um eine radikalische Additionsreaktion.

Vorzugsweise handelt es sich bei der Verbindung der Formel (XIII)

Y'-W-R₁ (XIII)

um eine Verbindung mit einem **Y'** der Formel (III'), einem **W** der Formel (VII) und einem R₁ = CH₃, wobei R₂, R₃ und R₄ unabhängig voneinander für H stehen.

Insbesondere bevorzugt handelt es sich um Methyl-poly(oxyethylen)vinylether, Methyl-poly(oxypropylen)vinylether,Methyl-poly(oxyethylenoxypropylen)vinylether.

Besonders bevorzugt sind:
Poly(oxyethylen)-vinylether (Alkoxylierungsgrad: 13-14 EO), mit einem Molekulargewicht von ca. 500 g/mol, Poly(oxyethylen)-1-oxytetramethylen-vinylether (Alkoxylierungsgrad: 8-9 EO), mit einem Molekulargewicht von ca. 500 g/mol.

Vorzugsweise handelt es sich bei der Verbindung der Formel (XIII)

Y'-W-R₁ (XIII)

um eine Verbindung mit einem **Y'** der Formel (III'), einem **W** der Formel (VIII) und einem R₁ = CH₃, wobei R₂ und R₃ unabhängig voneinander für H stehen und R₄ für H oder CH₃ steht.

Insbesondere bevorzugt handelt es sich um Methyl-poly(oxyethylen)-allylether, Methyl-poly(oxypropylen)allylether, Methyl-poly(oxyethylenoxy-propylen)allylether, Methyl-poly(oxyethylen)methallylether,Methyl-poly(oxypropylen)methallylether, Methyl-poly(oxyethylenoxypropylen)methallylether, Methyl-poly(oxyethylenoxypropylen)methylbutenether.

Besonders bevorzugt sind:
Poly(oxyethylen)-allylmethylether (Alkoxylierungsgrad: 2-8 EO), mit einem Molekulargewicht von ca. 250 g/mol, Poly(oxyethylen)-allylmethylether (Alkoxylierungsgrad: 3-10 EO), mit einem Molekulargewicht von ca. 350 g/mol, Poly(oxyethylen)-allylmethylether (Alkoxylierungsgrad: 10 EO), mit einem Molekulargewicht von ca. 500 g/mol, Poly(oxyethylen)-allylmethylether (Alkoxylierungsgrad: 24 EO), mit einem Molekulargewicht von ca. 1100 g/mol, Poly(oxyalkylen)-allylmethylether (Alkoxylierungsgrad: 20 EO und 20 PO), mit einem Molekulargewicht von ca. 2100 g/mol.

Vorzugsweise handelt es sich bei der Verbindung der Formel (XIII)

Y'-W-R₁ (XIII)

um eine Verbindung mit einem **Y'** der Formel (III'), einem **W** der Formel (IX) und einem R₁ = CH₃, wobei R₂ und R₃ unabhängig voneinander für H stehen, R₄ für H oder CH₃ steht und R₆ für O steht.

Insbesondere bevorzugt handelt es sich um Methyl-poly(oxyethylen)acrylat,Methyl-poly(oxypropylen)acrylat, Methyl-poly(oxy-ethylenoxypropylen)acrylat, Methyl-poly(oxyethylen)methacrylat, Methyl-poly-(oxypropylen)methacrylat, Methyl-poly(oxyethylenoxypropylen)methacrylat.

Vorzugsweise handelt es sich bei der Verbindung der Formel (XIII)

Y'-W-R₁ (XIII)

um eine Verbindung mit einem **Y'** der Formel (III'), einem **W** der Formel (IX) und einem R₁ = CH₃, wobei R₂ und R₃ unabhängig voneinander für H, CH₃, CH₂-COOH oder dessen Salz stehen, R₄ für H, CH₃ steht und R₆ für O steht.

Insbesondere bevorzugt handelt es sich um Methyl-poly(oxyethylen)crotonat, Methyl-poly(oxypropylen)crotonat, Methy-poly-(oxyethylenoxypropylen)crotonat, Methyl-poly(oxyethylen)maleat,Methyl-poly-(oxypropylen)maleat,Methyl-poly(oxyethylenoxypropylen)maleat, Methyl-poly(oxyethylen)fumarat, Methyl-poly(oxypropylen)fumarat, Methyl-poly(oxy-ethylenoxypropylen)fumarat, Methyl-poly(oxyethylen)itaconat, Methyl-poly-(oxypropylen)itaconat, Methyl-poly(oxyethylen-oxypropylen)itaconat, Methyl-poly(oxyethylen)citraconat, Methyl-poly(oxypropylen)-citraconat, Methyl-poly-(oxyethylenoxypropylen)citraconat, Methyl-poly(oxyethylen)-aconitat, Methyl-poly(oxypropylen)aconitat, Methyl-poly(oxyethylenoxypropylen)-aconitat.

Vorzugsweise handelt es sich bei der Verbindung der Formel (XIII)

Y'-W-R₁ (XIII)

um eine Verbindung mit einem **Y'** der Formel (III'), einem **W** der Formel (X) und einem R₁ = CH₃, wobei R₂ für CH₂-COOH steht, R₃ und R₄ für H stehen und R₆ für O steht.

Insbesondere bevorzugt handelt es sich um Methyl-poly(oxyethylen)pent-2-enedioicsäureester.

Vorzugsweise handelt es sich bei der Verbindung der Formel (XIII)

Y'-W-R₁ (XIII)

um eine Verbindung mit einem **Y'** der Formel (III'), einem **W** der Formel (IX) und einem R₁ = CH₃, wobei R₂ und R₃ unabhängig voneinander für H, CH₃, CH₂-COOH stehen, R₄ für H, CH₃ und R₆ für N steht.

Insbesondere bevorzugt handelt es sich um N-[methyl-poly(oxyethylen)]maleinsäurehalbamid,N-[methyl-poly(oxypropylen)]-maleinsäurehalbamid,N-[methyl-poly(oxyethylenoxypropylen)]maleinsäurehalbamid.

Vorzugsweise handelt es sich bei der Verbindung der Formel (XIII)

Y'-W-R₁ (XIII)

um eine Verbindung mit einem **Y'** der Formel (V'), einem **W** der Formel (VII) und einem R₁ = CH₃, wobei R₅ für -CH₂-CH₂- oder -CH₂-CH(CH₃)-CH₂, R₆ für N steht und der Index r=0 ist.

Insbesondere bevorzugt handelt es sich um N-[methyl-poly(oxyethylen)]maleimid, N-[methyl-poly(oxypropylen)]maleimid, N-[methyl-poly(oxyethylenoxypropylen)]maleimid.

Vorzugsweise handelt es sich bei der Phosphinsäure der Formel (XII) um Alkali-, Erdalkalisalze der Phosphinsäure oder deren Ammoniumsalze, in denen eines oder mehrere Wasserstoffatome durch organische Gruppen ersetzt sein können.

Solche substituierte Ammoniumverbindungen können hergestellt werden durch Neutralisation der Phosphinsäure mit Aminen oder mit C-hydroxylierten aliphatischen Aminen, insbesondere Mono-, Di- oder Triniederalkylaminen,z.B. Methyl-, Ethyl-, oder Diethylamin, Mono-, Di- oder Tri-(hydroxyniederalkyl-aminen, wie Ethanolamin, Di- oder Triethanolamin, Tris-(hydroxymethyl)methylamin oder N-(Hydroxyniederalkyl)-N,N-diniederalkyl-aminen.

Insbesondere bevorzugt handelt es sich bei der Phosphinsäure der Formel (XII) um Natriumphosphinatmonohydrat.

Als Radikalinitiator werden vorzugsweise Peroxysäuren und/oder ihre Salze, insbesondere ein Ammonium- oder Alkalimetallsalz der Peroxodischwefelsäure eingesetzt. Insbesondere bevorzugt wird als Radikalinitiator Natriumperoxodisulfat eingesetzt

Vorzugsweise umfasst das Verfahren folgende Schritte:
a) eine radikalische Additionsreaktion der Phosphinsäure der Formel (XII) mit einer Verbindung der Formel (XIII) und einem Radikalinitiator in einem Lösungsmittel;
b) gegebenenfalls Entfernung des Lösungsmittels, insbesondere durch Destillation, aus dem Reaktionsgemisch und gegebenenfalls Reinigung des Reaktionsprodukts aus dem Reaktionsgemisch.

Vorzugsweise beträgt das molare Verhältnis der Verbindung der Formel (XIII) zur Phosphinsäure der Formel (XII) 1:1 bis 1:10, bevorzugt 1:2 bis 1:6, insbesondere bevorzugt 1:2 bis 1:3. Dies ist aufgrund der höheren Ausbeute von monosubstituierter Phosphinsäure vorteilhaft.

Vorzugsweise weist das Verfahren ein Lösungsmittel auf, welches Wasser ist oder eine wässrige Lösung eines Lösungsmittels ausgewählt aus der Gruppe bestehend aus Ethanol, Methanol und Isopropanol, vorzugsweise ist das Lösungsmittel Wasser.

Wasser ist aus ökonomischen und ökologischen Betrachtungen bevorzugt, weiter ist die Verwendung von Wasser produktionstechnisch ungefährlich und die meisten Salze sind darin gut löslich.

Es ist weiter vorteilhaft, wenn der Schritt a) bei einer Reaktionstemperatur von 50°C bis 100°C, bevorzugt von 60°C bis 80°C durchgeführt wird

Falls es sich bei der Verbindung der Formel (XIII) um eine Verbindung mit einem **Y'** der Formel (III') und einem **W** der Formel (VII) oder (VIII) handelt, ist es vorteilhaft, dass der Schritt a) bei einem pH-Wert von 4 bis 8, bevorzugt bei einem pH-Wert von 6 bis 8 durchgeführt wird.

Vorteilhaft ist weiter das Durchführen einer Reinigung in Schritt b) mit einem Extraktionsmittel, welches ausgewählt ist aus der Gruppe bestehend aus Ethanol, Isopropanol, n-Propanol, Isobutanol, n-Butanol, Ethylenglykolmonomethyl- und Ethylenglykol-dimethylether. Vorzugsweise ist das Extraktionsmittel Isopropanol.

In einer bevorzugten Ausführungsform wird in Schritt a) eine wässrige Lösung von Natriumphosphinat vorgelegt und zu dieser dann, vorzugsweise innerhalb von 60 - 300 min, eine wässrige Lösung einer Verbindung der Formel (XIII) mit einem **Y'** der Formel (III') und einem **W** der Formel (VII) oder (VIII) zusammen mit dem Radikalinitiator zugetropft. Die Temperatur während der Reaktion in Schritt a) beträgt vorzugsweise 60 - 80 °C.

Vorzugsweise beträgt das molare Verhältnis von Natriumphosphinat zur Verbindung der Formel (XIII) 1:1 bis 1:10, besonders bevorzugt 1:2 bis 1:6.

Vorzugsweise beträgt das molare Verhältnis von Radikalinitiator zur Verbindung der Formel (XIII) 0.005:1 bis 0.2:1, insbesondere bevorzugt 0.01:1 bis 0.05:1.

Es kann weiter vorteilhaft sein, in dem Schritt b) das Lösungsmittel zu entfernen, durch Eindampfen der Reaktionslösung zur Trockne. Weiter vorteilhaft ist eine Reinigung des Reaktionsproduktes auf dem Reaktionsgemisch. Dazu wir der Rückstand während 30 - 60 min in einem Extraktionsmittel, in dem das Reaktionsprodukt löslich ist, gerührt, wobei nach Filtration die anorganischen Salze als Filterkuchen zurückbleiben. Aus dem Filtrat wird dann durch Eindampfen ein Rohprodukt des Reaktionsproduktes erhalten.

Das überschüssige Phosphinat kann durch Recyclierung aus dem Filterkuchen zurückgewonnen und einer Wiederverwendung zugänglich gemacht werden.

Weitere bevorzugte Ausführungsformen sind Verfahren mit folgenden Umsetzungen:
Natriumphosphinat mit Methyl-poly(oxyethylen)acrylat, (Alkoxylierungsgrad: 3-8 EO), oder Natriumphosphinat mit Methyl-poly(oxyethylen)maleat, (Alkoxylierungsgrad: 11 EO), oder Natriumphosphinat mit N-[methyl-poly(oxyethylen)-maleinsäurehalbamid, (Alkoxylierungsgrad: 13 EO), oder Natriumphosphinat mit N-[methyl-poly(oxyethylen)]maleimid, (Alkoxylierungsgrad: 13 EO).

In einem weiteren Aspekt betrifft die Erfindung die Verwendung einer monosubstituierten Phosphinsäure der Formel (I), wie sie vorgehend beschrieben ist, sowie die Verwendung einer monosubstituierten Phosphinsäure, hergestellt durch Umsetzung einer Phosphinsäure der Formel (XII) mit einer Verbindung der Formel (XIII), wie sie vorgehend beschrieben ist, als Molekulargewichtsregler bei radikalischen Polymerisationen.

Unter dem Begriff "Molekulargewichtsregler" wird im vorliegenden Dokument eine Verbindung mit hohen Übertragungskonstanten verstanden, die bei radikalischen Polymerisationen eingesetzt werden. Molekulargewichtsregler beschleunigen Kettenabbruchreaktionen und bewirken damit eine Herabsetzung des Polymerisationsgrades der resultierenden Polymeren, ohne die Bruttoreaktions-Geschwindigkeit zu beeinflussen.

In einem weiteren Aspekt betrifft die Erfindung ein Verfahren zur Herstellung von Polymeren **P** durch radikalische Polymerisation von Monomeren **M** unter Verwendung einer monosubstituierten Phosphinsäure der Formel (I) oder einer monosubstituierten Phosphinsäure, hergestellt durch Umsetzung einer Phosphinsäure der Formel (XII) mit einer Verbindung der Formel (XIII), wie sie vorgehend beschrieben ist.

Es ist auch möglich, neben einer vorgehend genannten monosubstituierten Phosphinsäure weitere herkömmliche Molekulargewichtsregler, beispielsweise organische Thiole, einzusetzen. Die erfindungsgemässen Molekulargewichtsregler können zeitgleich mit anderen Reaktionskomponenten, aber auch zu unterschiedlichen Zeiten zugesetzt werden. Die Zugabe der Molekulargewichtsregler erfolgt vorzugsweise kontinuierlich im Verlauf der Polymerisationsreaktion oder durch Vorlage im Reaktor.

Vorzugsweise sind die Monomere **M** ausgewählt aus der Gruppe bestehend aus:
- monoethylenisch ungesättigten (C₃-C₆)-Mono- und Dicarbonsäuren,
- (C₁-C₂₀)-(Meth-)Alkylacrylaten, (C₁-C₂₀)-(Meth-)Alkylacrylamiden, (C₁-C₂₀)-(Meth-)Alkylacrylnitrilen und Poly(oxyalkylen)(meth-)acrylaten,
- Vinylestern von bis zu 20 C-Atome enthaltenden Carbonsäuren, Vinylaromaten mit bis zu 20 C-Atomen,
- Vinylethern und Allylethern von 1 - 12 C-Atome enthaltenden Alkoholen, Methyl-poly(oxyalkylen)-allylethern, Methyl-poly(oxyalkylen)vinylethern,
- aliphatischen Kohlenwasserstoffen mit 2 - 10 C-Atomen und 1 oder 2 olefinischen Doppelbindungen, cyclischen und offenkettigen N-Vinylamiden,
- und Mischungen dieser Monomeren.

Bevorzugte monoethylenisch ungesättigte (C₃-C₆)-Mono- und Dicarbonsäuren sind beispielsweise Acrylsäure, Methacrylsäure, Vinylessigsäure, Crotonsäure, Fumarsäure, Maleinsäure, Itaconsäure sowie deren C1 - C20-Alkylester und -Methyl-poly(oxyalkylen)ester, deren Amide, Nitrile und Anhydride.

Als Beispiele seien die Folgenden genannt: Acrylsäuremethylester, Acrylsäureethylester, Methacrylsäuremethylester, Methacrylsäureethylester, 2-Ethylhexylacrylat, 2-Ethylhexylmethacrylat,Methyl-poly(oxyethylen)acrylat, Methyl-poly(oxypropylen)acrylat, Methyl-poly(oxyethylenoxypropylen)acrylat, Methyl-poly(oxyethylen)methaycrylat, Methyl-poly(oxypropylen)methycrylat, Methyl-poly(oxyethylenoxypropylen)methacrylat,Maleinsäureanhydrid, Itaconsäureanhydrid, Maleinsäuremonomethylester, Maleinsäuredimethylester, Maleinsäuremonoethylester, Maleinsäurediethylester,Mono-[methyl-poly-(oxyethylen)]maleat, Mono-[methyl-poly(oxypropylen)]maleat, Mono-[methyl-poly(oxyethylenoxypropylen)]maleat, Di-[methyl-poly(oxyethylen] maleat, Di-[methyl-poly(oxypropylen]maleat, Di-[methyl-poly(oxyethylenoxypropylen] maleat, Alkylenglykolacrylate und-methacrylate, Alkylen-glykolmaleate und - itaconate, Acrylamid, Methycrylamid, N,N-Dimethylacrylamid, und Dialkylaminoalkylacrylamide und -methaycrylamide.

Als (C₁-C₂₀)-(Meth-)Alkylacrylaten, (C₁-C₂₀)-(Meth-)Alkylacrylamiden, (C₁-C₂₀)-(Meth-)Alkylacrylnitrilen und Poly(oxyalkylen)(meth-)acrylaten sind bevorzugt:
(C₁-C₁₀)-Hydroxyalkylacrylate und -methacrylate wie Hydroxyethylacrylat, Hydroxypropylacrylat, Hydroxybutylacrylat, Hydroxyethylmethacrylat, Hydroxypropylmethycrylat, Hydroxyisobutmethacrylat

Bevorzugte Vinylmonomere sind z.B. Vinylacetat, Vinylpropionat, Vinyllaurat, Vinylstearat, Versaticsäurevinylester und N-Vinylpyrrolidon.

Bevorzugte vinylaromatische Verbindungen sind o- und p-Methylstyrol, Vinyltoluol und besonders bevorzugt Styrol.

Als bevorzugte Vinylether zu nennen sind beispielsweise Methylvinylether, Ethylvinylether, Butylvinylether, 4-Hydroxybutylvinylether, Isopropylvinylether, Propylvinylether, Vinylisobutylether und Dodecylvinylether.

Als besonders bevorzugte Vinylmonomere zu nennen sind die Vinylether der Methyl-polyalkylenglykole wie z.B. Methyl-poly(oxyethylen)-vinylether (Alkoxylierungsgrad: 2-24 EO), Methyl-poly(oxypropylen)vinylether (Alkoxylierungsgrad: 2-20 EO) und Methyl-poly(oxyethylenoxypropylen)-vinylether mit variablem EO: PO-Verhältnis.

Es können aber auch offenkettige N-Vinylamidverbindungen wie z.B. N-Vinylformamid, N-Vinyl-N-methylformamid, N-Vinylacetamid, N-Vinyl-N-methylacetamid eingesetzt werden.

Weitere bevorzugte Monomere sind beispielsweise (C1 - C10)-Alkylallylether und ganz besonders bevorzugt sind die Poly(oxyalkylen)allylether und die Methyl-poly(oxyalkylen)allylether die unterschiedliche Alkoxylierungsgrade aufweisen können Als Beispiele genannt sind Poly(oxyethylen)allylether, Poly(oxypropylen)allylether, Poly(oxyethylen-oxypropylen)allylether mit variablem EO:PO-Verhältnis, Methyl-poly(oxyethylen)allylether, Methyl-poly(oxypropylen)allylether und Methyl-poly(oxyethylenoxypropylen)allylether mit variablem EO: PO-Verhältnis.

Als aliphatische Kohlenwasserstoffe mit 2 - 8 C-Atomen und einer oder zwei olefinischen Doppelbindungen seien beispielhaft Ethylen, Propylen, 1-Buten, Isobuten, und Isopren genannt.

Darüber hinaus sind alle weiteren ethylenisch ungesättigten Monomeren möglich, deren Polymerisation nach einem radikalisch initiierten Mechanismus verläuft.

Vorzugsweise wird die radikalische Polymerisation in Emulsion, in Masse oder in Lösung, bevorzugt in Lösung, insbesondere bevorzugt in Wasser, ausgeführt. Die radikalische Polymerisation kann in der dem Fachmann bekannten Weise durchgeführt werden, typischerweise in einem Polymerisationsreaktor, der mit einem Rührer, mehreren Zulaufgefässen und - Leitungen, Rückflusskühler, Heiz- und Kühlvorrichtungen versehen ist und für das Arbeiten unter Inertgasatmosphäre und bei Über- oder Unterdruck geeignet ist.

Die Wahl der verschiedenen Oxyalkylgruppen im [(EO)ₓ-(PO)_{y}-(BuO)_{z}] der Formel (XV) in [AO] von W der Verbindung (I) ermöglicht eine gezielte Steuerung des Lösungverhaltens des Molekulargewichtreglers im System.

In Polymerisationsreaktionen, die in organischen Lösemitteln durchgeführt werden oder als Emulsionspolymerisationen, werden bevorzugt Regler mit hydrophoben Gruppen im Überschuss, z.B. PO- oder BuO-Gruppen, für sich allein oder zusammen, mit einem geringen Anteil, insbesondere ≤ 30 Gew.-%, vorzugsweise ≤ 20 Gew.-%, insbesondere bevorzugt ≤ 10 Gew.-%, EO-Gruppen, bezogen auf das Molekulargewicht der monosubstituierten Phosphinsäure, eingesetzt.

Durch die Einführung von ≥ 50 Gew.-%, insbesondere ausschliesslich EO-Gruppen in [AO] von W der Verbindung (I) erhalten die Molekulargewichtsregler ein hydrophiles Löslichkeitsverhalten, so dass diese Molekulargewichtsregler bevorzugt für Lösungspolymerisationen in wässrigen Medien eingesetzt werden.

Es ist weiter vorteilhaft, wenn die radikalische Polymerisation in Gegenwart von mindestens einem organischen Lösemittel durchgeführt wird und die monosubstituierte Phosphinsäure einen Anteil von ≥ 70 Gew.-%, vorzugsweise ≥ 80 Gew.-%, Oxypropylgruppen (PO)- oder Oxybutylgruppen (BO) aufweist, bezogen auf das Molekulargewicht der monosubstituierten Phosphinsäure, wobei der Anteil des organischen Lösemittels 5 - 90 Gew.-%, vorzugsweise 5 - 50 Gew.-%, beträgt, bezogen auf das Gesamtgewicht des Lösungsmittels.

Dies ist dahingehend von Vorteil, dass dadurch die Löslichkeit der die monosubstituierten Phosphinsäure im Lösungsmittel verbessert wird und die die monosubstituierte Phosphinsäure kaum, insbesondere nicht ausfällt, was für den Herstellungsprozess vorteilhaft ist.

Unter dem Begriff "organische Lösungsmittel" werden im vorliegenden Dokument Verbindungen verstanden, wie sie aufgeführt sind als organische Lösungsmittel in CD Römpp Chemie Lexikon, 9. Auflage, Version 1.0, Georg Thieme Verlag, Stuttgart 1995.

Es ist weiter vorteilhaft, wenn die radikalische Polymerisation in Gegenwart von Wasser durchgeführt wird und die monosubstituierte Phosphinsäure einen Anteil von ≥ 50 Gew.-%, vorzugsweise ≥ 70 Gew.-%, insbesondere bevorzugt ≥ 80 Gew.-%, Ethylengruppen (EO) aufweist, bezogen auf das Molekulargewicht der monosubstituierte Phosphinsäure, wobei der Anteil von Wasser 50 - 100 Gew.-% beträgt, bezogen auf das Gesamtgewicht des Lösungsmittels.

Dies ist dahingehend von Vorteil, dass dadurch die Löslichkeit der die monosubstituierten Phosphinsäure in Wasser verbessert wird und die die monosubstituierte Phosphinsäure kaum, insbesondere nicht ausfällt, was für den Herstellungsprozess vorteilhaft ist.

Es ist weiter vorteilhaft, wenn die radikalische Polymerisation einen Radikalinitiator aufweist, welcher ausgewählt ist aus der Gruppe bestehend aus:
Peroxodisulfate wie Natrium-, Kalium- oder Ammoniumperoxodisulfat; 2,2'-Azobis-isobutyronitril;
und Redoxsysteme auf Basis von Hydroperoxiden wie Wasserstoffperoxid, t-Butylhydroperoxid, Cumolhydroperoxid die für sich oder zusammen mit Redoxinitiatoren wie beispielsweise Natriumbisulfit, Natriumsulfit, Ascorbinsäure, Isoascorbinsäure und Natrium formaldehyd-sulfoxylat angewendet werden.

Unter dem Begriff "Radikalinitiator" wird im vorliegenden Dokument eine Verbindung verstanden, wie sie beschrieben ist als Initiator in CD Römpp Chemie Lexikon, 9. Auflage, Version 1.0, Georg Thieme Verlag, Stuttgart 1995, welche sich für radikalische Polymerisationen eignen.

Vorzugsweise wird der Radikalinitiator im Verhältnis 0.05 bis 20 Gew.-%, bevorzugt 0.01 bis 10 Gew.-%, insbesondere bevorzugt im Verhältnis von 0.1 bis 2 Gew.-%, bezogen auf das Gesamtgewicht der Monomeren **M** eingesetzt.

Findet die Reaktion in Wasser statt, werden bevorzugt Initiatoren verwendet, die in Wasser gut löslich sind. Besonders bevorzugt sind Peroxodisulfate wie Natrium-, Kalium- oder Ammoniumperoxodisulfat, aber auch 2,2'-Azobis-isobutyronitril oder Redoxsysteme auf Basis von Hydroperoxiden wie Wasserstoffperoxid, t-Butylhydroperoxid, Cumolhydroperoxid die für sich oder zusammen mit Redoxinitiatoren wie beispielsweise Natriumbisulfit, Natriumsulfit, Ascorbinsäure, Isoascorbinsäure und Natrium formaldehyd-sulfoxylat angewendet werden.

Der Radikalinitiator kann auf verschiedene Art im Verlauf der radikalischen Polymerisation dem Reaktor zugegeben werden. Er kann sowohl vollständig in das Polymerisationsgefäss als auch nach Massgabe seines Verbrauchs im Verlauf der Polymerisation kontinuierlich oder stufenweise zugefügt werden. Im Speziellen hängt dies von der Polymerisationstemperatur als auch von den chemischen Eigenschaften des Initiatorsystems ab. Vorzugsweise wird meist ein kleiner Teil des Initiators vorgelegt und der Rest nach Massgabe des Verbrauchs dem Polymerisationsgemisch zugeführt. Es ist oft empfehlenswert, die Polymerisationsreaktion so durchzuführen, dass vorerst 40 - 50 Gew.-% des Radikalinitiator kontinuierlich über eine längere Zeitperiode und daran anschliessend 50 - 60 Gew.-% des Radikalinitiator kontinuierlich über eine kürzere Zeitperiode dem Polymerisationsreaktor zugeführt werden.

Die Polymerisationstemperaturen hängen von der Zerfallskonstanten ab und liegen normalerweise im Bereich von 50 - 120°C, vorzugsweise 60 - 80 °C, besonders bevorzugt 80 - 100 °C.

Vorzugsweise beträgt das Mol-%-Verhältnis der monosubstituierten Phosphinsäure oder deren Salz zu in der radikalischen Polymerisation eingesetzten Monomere **M** 0.1 - 20, vorzugsweise 1 - 5, bezogen auf die in der radikalische Polymerisation eingesetzten Gesamtmolmenge der monosubstituierte Phosphinsäure und Monomere **M**.

Vorzugsweise wird der Radikalinitiator im Verhältnis 0.001 bis 10 Gew.-%, bevorzugt 0.05 bis 5 Gew.-%, insbesondere bevorzugt im Verhältnis von 0.1 bis 2 Gew.-%, bezogen auf das Gesamtgewicht der Monomeren **M** eingesetzt.

Es können auch ein kleiner Teil, etwa 5 - 10 Gew.-% der gesamten Molekulargewichtsreglermenge, zusammen mit einem kleinen Gewichtsteil, etwa 5 bis 10 Gew.-% der gesamten Radikalinitiatormenge, im Reaktor vorgelegt und dann die Reaktionskomponenten über separate Zuläufe gleichzeitig zugegeben werden, d.h. die Molekulargewichtsreglerzugabe erfolgt parallel zur Monomerzugabe, wobei die Dosierungen so eingestellt werden, dass bevorzugt die Hauptmenge des Molekulargewichtsreglers im gleichen Zeitraum zugegeben wird, in dem auch die Monomere zugeführt werden.

In weiteren bevorzugten Ausführungsformen erfolgt die Dosierung des Molekulargewichtsreglers über Fahrweisen, in denen die Molekulargewichtsreglerzugabe früher als der Monomerzulauf startet.

Es ist weiter vorteilhaft, wenn die Polymere **P**, hergestellt durch die radikalische Polymerisation, ein Molekulargewicht von 500-200'000 g/mol, vorzugsweise 2'000-50'000 g/mol, aufweisen.

In einem weiteren Aspekt betrifft die Erfindung ein Polymer der Formel (XIV) 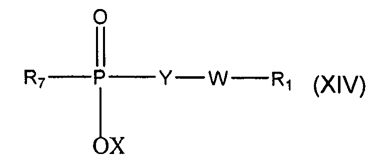 wobei **X**, **Y**, **W**, R₁ für Reste stehen, wie sie vorgehend beschrieben sind;
und R₇ für ein Polymer umfassend mindestens ein Monomer **M**, wie sie vorgehend erwähnt sind, in polymerisierten Zustand steht, wobei R₇ ein Molekulargewicht von 500-200'000 g/mol, vorzugsweise 2'000-50'000 g/mol aufweist.

Vorzugsweise besteht R₇ zu einen Anteil von ≥ 80 Gew.-%, insbesondere ≥ 90 Gew.-%, insbesondere bevorzugt ≥ 95 Gew.-% aus Monomeren **M** in ihrem polymerisierten Zustand, bezogen auf das Molekulargewicht von R₇.

Unter Monomeren **M** in ihrem polymerisierten Zustand werden Monomeren **M** verstanden, welche nach einer radikalischen Polymerisationsreaktion in Form eines Polymers vorliegen.

### Beispiele

### Beschreibung der Messmethoden

Die **Infrarotspektren** wurden auf einem FT-IR Gerät 1600 von Perkin-Elmer gemessen (horizontale ATR-Messeinheit mit ZnSe-Kristall); die Proben wurden unverdünnt als Filme aufgetragen. Die Absorptionsbanden sind in Wellenzahlen (cm⁻¹) angegeben (Messfenster: 4000-650 cm⁻¹).

**¹H-NMR-Spektren** wurden gemessen auf einem Spektrometer des Typs Bruker DPX-300 bei 300.13 MHz; die chemischen Verschiebungen δ sind angegeben in ppm. Die Kopplungsmuster (t, m) wurden angegeben, auch wenn es sich nur um Pseudokopplungsmuster handelt.

**³¹P-NMR-Spektren** wurden gemessen auf einem Spektrometer des Typs Bruker DPX-300 bei 300.13 MHz unter der Verwendung von CDCl₃ als Lösungsmittel.

Die **Viskosität** wurde auf einem Rotations-Viskosimeter der Firma Mettler Toledo des Typs RM 180 (Messsystem 11, Zylinder 1, Dichte 1.1, Intervall 100, Umdrehung 100 rpm) gemessen.

Die **Chromatographiemessungen** wurden mit einem ACQUITY UPLC® der Firma Waters Corporation unter Verwendung eines ELS- und PDA-Detectors sowie einer BEH 300 C18, 2.1 x 100 mm, 1.7 µm -Säule mit 0.15%-igem HCOOH in Wasser als Laufmittel A und Acetonitril als Laufmittel B.

### Herstellung von Verbindungen der Formel (I)

### Beispiel 1

### Natrium-3-[methyl-poly(oxyethylen)-oxy-]propylphosphinat (Alkoxylierungsgrad: 3-10 EO, Mw 400-600 g/mol)

In einem Glasreaktor mit mechanischem Rührer, Thermometer und Tropftrichter wurden 106 g (1 mol) Natriumhypophosphit-monohydrat, gelöst in 300 g Wasser, vorgelegt und auf 70 °C erwärmt. Zu dieser Lösung wurden dann bei 70-72 °C innerhalb von 90 min eine Lösung von 70 g (ca.0.2 mol) (Poly(oxyethylen)-allylmethylether (Alkoxylierungsgrad: 3-10 EO) und 1 g Natriumperoxodisulfat in 100 g Wasser zugetropft.

Anschliessend wurde noch 30 min bei 70 °C nachreagiert bis flüssigchromatographisch kein Allylmethylether mehr nachgewiesen werden konnte. Dann wurde die Reaktionslösung bis zur Trockne eingedampft. Der Rückstand wurde in 350 g Isopropanol aufgenommen und diese Aufschlämmung 30 min bei Raumtemperatur gerührt und dann über eine Nutsche abfiltriert.

Der Filterkuchen, der zum grössten Teil aus überschüssigem Natriumhypophosphit besteht, wurde mit 50 ml Isopropanol gewaschen und das Filtrat über 50 g wasserfreiem Natriumsulfat getrocknet. Das getrocknete Filtrat wurde durch einen Faltenfilter filtriert und zur Trockne eingedampft. Es wurden 70 g Rohprodukt erhalten. Zur weiteren Reinigung wurde das stark hygroskopische Rohprodukt für zwei Stunden am Hochvakuum getrocknet und dann in 100 g Isopropanol gelöst und durch einen 10 µm-Filter filtriert. Das Filtrat wurde zur Trockne eingedampft und der farblose Rückstand über Nacht am Hochvakuum getrocknet. Es wurden 68.5 g (78.2 %) eines farblosen, wachsartigen, chromatographisch (UPLC) reinen Produktes erhalten.

**Analyse**

| | |
|---|---|
| Molekulargewicht (theoretisch) | 454 g/mol |
| Elementaranalyse berechnet (%): | C 45,92, H 8,15, P 6,83 |
| Elementaranalyse gefunden (%): | C 42,54, H 7,68, P 7.88 |
| IR(Film): | 2289 cm⁻¹( P-H ), 1296 cm⁻¹( P=O ), 1098 cm⁻¹( C-O-C) |
| H-NMR(CDCl₃): | δ 8,00 - 5,90ppm (m, 1H, P-H); 3,90 - 3.41 ppm (m, CH₂-O); 1,85-1,45ppm (m, 4H, CH₂-CH₂) |
| ³¹P-NMR: | δ(ppm): 47,05; 33,37; 29,11; 25,11. |
| MS: | 315 {[MH]⁺, n=4mol EO}; 359 {[MH]⁺, n=5}; 403 {[MH]⁺, n=6}; 447 {[MH]⁺, n=7} 491 {[MH]⁺, n=8}; 535 {[MH]⁺, n=9}; 579 {[MH]⁺ n=10}; 623 {[MH]⁺, n=11}, 667 {[MH]⁺, n=12}; 711 {[MH]⁺, n=13}; 755 {[MH]⁺, n=14}; |

### Beispiel 2

### Natrium-3-[methyl-poly(oxyethylen)-oxy-]propylphosphinat (Alkoxylierungsgrad: 2-8 EO, Mw =250-400 g/mol)

In einem 2-Liter-Glasreaktor mit mechanischem Rührer, Thermometer und Tropftrichter wurden 212 g (2 mol) Natriumhypophosphit-monohydrat, gelöst in 600 g Wasser, vorgelegt und auf 70 °C erwärmt. Zu dieser Lösung wurden dann bei 70-72 °C innerhalb von 90 min eine Lösung von 100 g (ca. 0.4 mol) Poly-(oxyethylen)-allylmethylether (Alkoxylierungsgrad: 2-8 EO) und 2 g (0.008 mol) Natriumperoxodisulfat in 100 g Wasser zugetropft.

Anschliessend wurde noch 30 min bei 70 °C nachreagiert bis flüssigchromatographisch kein Allylether mehr nachgewiesen werden konnte und dann wurde die Reaktionslösung am Rotationsverdampfer bis zur Trockne eingedampft. Der Rückstand wurde in 600 g Isopropanol aufgenommen und diese Aufschlämmung 30 min bei Raumtemperatur gerührt und dann über eine Nutsche abfiltriert.

Der Filterkuchen, der zum grössten Teil aus überschüssigem Natriumhypophosphit besteht, wurde nun mit 80 ml Isopropanol gewaschen und das Filtrat über 75 g wasserfreiem Natriumsulfat getrocknet.

Das getrocknete Filtrat wurde durch einen Faltenfilter filtriert und zur Trockne eingedampft. Es wurden 112.4 g Rohprodukt erhalten.

Zur weiteren Reinigung wurde das stark hygroskopische Rohprodukt für zwei Stunden am Hochvakuum getrocknet und dann in 150 g Isopropanol gelöst und durch einen 10 µm-Filter filtriert. Das Filtrat wurde zur Trockne eingedampft und der farblose Rückstand über Nacht am Hochvakuum getrocknet. Es wurden 109.1 g (81.2%) eines farblosen, wachsartigen, chromatographisch (UPLC) reinen Produktes erhalten.

### Beispiel 3

### Natrium-3-[methyl-poly(oxyethylen)-oxy-]propylphosphinat (Alkoxylierungsgrad: ca. 10 EO, Mw = 500-600 g/mol)

In einem Glasreaktor mit mechanischem Rührer, Thermometer und Tropftrichter wurden 106 g (1mol) Natriumhypophosphit-monohydrat, gelöst in 300 g Wasser, vorgelegt und auf 70 °C erwärmt.

Zu dieser Lösung wurden dann bei 75-76 °C innerhalb von 120 min eine Lösung von 100 g (ca. 0.2mol) Methyl-poly(oxyethylen)allylmethylether (Alkoxylierungsgrad: ca. 10 EO) und 1.2 g Natriumperoxodisulfat in 100 g Wasser zugetropft. Anschliessend wurde noch 45 min bei 75 °C nachreagiert bis flüssigchromatographisch kein Poly(oxyethylen)-allylmethylether mehr nachgewiesen werden konnte. Dann wurde die Reaktionslösung zur Trockne eingedampft. Der Rückstand wurde in 400g Isopropanol aufgenommen und diese Aufschlämmung 30 min bei Raumtemperatur gerührt und über eine Nutsche abfiltriert.

Der Filterkuchen, der zum grössten Teil aus überschüssigem Natriumhypophosphit besteht, wurde nun mit 75 ml Isopropanol gewaschen und das Filtrat über 80 g wasserfreiem Natriumsulfat getrocknet. Das getrocknete Filtrat wurde durch einen Faltenfilter filtriert und zur Trockne eingedampft. Es wurden 92 g Rohprodukt erhalten. Zur weiteren Reinigung wurde das stark hygroskopische Rohprodukt für zwei Stunden am Hochvakuum getrocknet und dann in 150 g Isopropanol gelöst und durch einen 10 µm-Filter filtriert.

Das Filtrat wurde zur Trockne eingedampft und der farblose Rückstand über Nacht am Hochvakuum getrocknet. Es wurden 88.5 g (75.3 %) eines farblosen, wachsartigen, chromatographisch (UPLC) reinen Produktes erhalten

### Beispiel 4

### Natrium-3-[methyl-poly(oxyethylen)-oxy-]propylphosphinat (Alkoxylierungsgrad: ca. 24 EO, Mw =1100-1200 g/mol)

In einem Glasreaktor mit mechanischem Rührer, Thermometer und Tropftrichter wurden 106 g (1 mol) Natriumhypophosphit-monohydrat, gelöst in 300 g Wasser, vorgelegt und auf 75° C erwärmt. Zu dieser Lösung wurden dann bei 75-76 °C innerhalb von 160 min eine Lösung von 220 g (ca. 0.2mol) Poly(oxyethylen)-allylmethylether (Alkoxylierungsgrad: ca. 24 EO) und 1.2 g Natriumperoxodisulfat in 230 g Wasser zugetropft. Anschliessend wurde noch 45 min bei 75° C nachreagiert bis flüssigchromatographisch kein Allylether mehr nachgewiesen werden konnte und dann die Reaktionslösung am Rotationsverdampfer bis zur Trockne eingedampft. Der Rückstand wurde in 800 g Isopropanol aufgenommen und diese Aufschlämmung 30 min bei Raumtemperatur gerührt und dann über eine Nutsche abfiltriert. Der Filterkuchen, der zum grössten Teil aus überschüssigem Natriumhypophosphit besteht, wurde nun mit 300 ml Isopropanol gewaschen und das Filtrat über 120g wasserfreiem Natriumsulfat getrocknet. Das getrocknete Filtrat wurde durch einen Faltenfilter filtriert und zur Trockne eingedampft Es wurden 195 g Rohprodukt erhalten.

Zur weiteren Reinigung wurde das stark hygroskopische Rohprodukt für zwei Stunden am Hochvakuum getrocknet und dann in 200 g Isopropanol gelöst und durch einen 10 µm-Filter filtriert. Das Filtrat wurde zur Trockne eingedampft und der farblose Rückstand über Nacht am Hochvakuum getrocknet. Es wurden 171 g (72%) eines farblosen, wachsartigen, chromatographisch(UPLC) reinen Produktes erhalten.

### Beispiel 5

### Natrium-3-[methyl-poly(oxyethylenoxypropylen)-oxy-]propylphosphinat (Alkoxylierungsgrad: ca. 20 EO und 20 PO, Mw = 1500-2200 g/mol)

In einem Glasreaktor mit mechanischem Rührer, Thermometer und Tropftrichter wurden 106 g (1 mol) Natriumhypophosphit-monohydrat, gelöst in 300g Wasser, vorgelegt und auf 75 °C erwärmt. Zu dieser Lösung wurden dann bei 75-76 °C innerhalb von 160 min eine Lösung von 420 g (ca.0.2 mol) Poly(oxyethylenoxypropylen)-allylmethylether (Alkoxylierungsgrad: ca. 20 EO und 20 PO) und 1.2 g Natriumperoxodisulfat in 800 g Wasser/Ethanol (1:1) zugetropft. Anschliessend wurde noch 60 min bei 75 °C nachreagiert bis flüssigchromatographisch kein Allylmethylether mehr nachgewiesen werden konnte. Anschliessend wurde die Reaktionslösung am Rotationsverdampfer bis zur Trockne eingedampft. Der Rückstand wurde in 900 g Isopropanol aufgenommen und diese Aufschlämmung 30 min bei Raumtemperatur gerührt und dann über eine Nutsche abfiltriert. Der Filterkuchen, der zum grössten Teil aus überschüssigem Natriumhypophosphit besteht, wurde nun mit 300 ml Isopropanol gewaschen und die vereinigten Filtrate über 120 g wasserfreiem Natriumsulfat getrocknet. Das getrocknete Filtrat wurde durch einen Faltenfilter filtriert und zur Trockne eingedampft Es wurden 386 g Rohprodukt erhalten.

Zur weiteren Reinigung wurde das hygroskopische Rohprodukt für zwei Stunden am Hochvakuum getrocknet und dann in 500 g Isopropanol gelöst und durch einen 10 µm-Filter filtriert. Das Filtrat wurde zur Trockne eingedampft und der farblose Rückstand über Nacht am Hochvakuum getrocknet. Es wurden 355 g (81%) eines schwach gelben, wachsartigen, chromatographisch (UPLC) reinen Produktes erhalten.

### Beispiel 6

### Natrium[poly(oxyethylen)]-phosphinat, (Alkoxylierungsgrad: 13-14 EO, Mw = 500-700 g/mol)

In einem Glasreaktor mit mechanischem Rührer, Thermometer und Tropftrichter wurden 212 g (2 mol) Natriumhypophosphit-monohydrat, gelöst in 600 g Wasser, vorgelegt und auf 70 °C erwärmt. Zu dieser Lösung wurden dann bei 70-72 °C innerhalb von 90 min eine Lösung von 200 g (ca. 0.4 mol) Poly(oxyethylen)-vinylether vom Molekulargewicht ca. 500 g/mol und 2,3 g (0.01 mol) Natriumperoxodisulfat in 100 g Wasser zugetropft. Anschliessend wurde noch 30 min bei 70 °C nachreagiert bis flüssigchromatographisch kein Vinylether mehr nachgewiesen werden konnte und dann die Reaktionslösung am Rotationsverdampfer bis zur Trockne eingedampft.

Der Rückstand wurde in 600 g Isopropanol aufgenommen und diese Aufschlämmung 30 Minuten bei Raumtemperatur gerührt und dann über eine Nutsche abfiltriert. Der Filterkuchen, der zum grössten Teil aus überschüssigem Natriumhypophosphit besteht, wurde nun mit 80 ml Isopropanol gewaschen und die vereinigten Filtrate über 75 g wasserfreiem Natriumsulfat getrocknet. Das getrocknete Filtrat wurde durch einen Faltenfilter filtriert und zur Trockne eingedampft Es wurden 191.4 g Rohprodukt erhalten.

Zur weiteren Reinigung wurde das stark hygroskopische Rohprodukt für zwei Stunden am Hochvakuum getrocknet und dann in150 g Isopropanol gelöst und durch einen 10 µm-Filter filtriert. Das Filtrat wurde zur Trockne eingedampft und der farblose Rückstand über Nacht am Hochvakuum getrocknet. Es wurden 167.1g (71%) eines farblosen, wachsartigen, chromatographisch (UPLC) reinen Produktes erhalten.

### Beispiel 7

### Natrium-2-[poly(oxyethylen)-1,4-dioxybutylen] ethylphosphinat, Mw 500-700 g/mol.

In einem Glasreaktor mit mechanischem Rührer, Thermometer und Tropftrichter wurden 212 g (2 mol) Natriumhypophosphit-monohydrat, gelöst in 600 g Wasser, vorgelegt und auf 70 °C erwärmt. Zu dieser Lösung wurden dann bei 70-72 °C innerhalb von 90 Minuten eine Lösung von 200 g (ca. 0.4mol) Poly(oxyethylen)-1,4-dioxybutylenvinylether vom Molekulargewicht ca. 500 g/mol und 2 g (0.008 mol) Natriumperoxodisulfat in 100 g Wasser zugetropft.

Anschliessend wurde noch 30 Minuten bei 70 °C nachreagiert bis flüssigchromatographisch kein Vinylether mehr nachgewiesen werden konnte und dann die Reaktionslösung am Rotationsverdampfer bis zur Trockne eingedampft. Der Rückstand wurde in 600 g Isopropanol aufgenommen und diese Aufschlämmung 30 Minuten bei Raumtemperatur gerührt und dann über eine Nutsche abfiltriert. Der Filterkuchen, der zum grössten Teil aus überschüssigem Natriumhypophosphit besteht, wurde nun mit 80 ml Isopropanol gewaschen und die vereinigten Filtrate über 75 g wasserfreiem Natriumsulfat getrocknet. Das getrocknete Filtrat wurde durch einen Faltenfilter filtriert und zur Trockne eingedampft. Es wurden 189.4 g Rohprodukt erhalten.

Zur weiteren Reinigung wurde das stark hygroskopische Rohprodukt für zwei Stunden am Hochvakuum getrocknet und dann in 150 g Isopropanol gelöst und durch einen 10 µm-Filter filtriert. Das Filtrat wurde zur Trockne eingedampft und der farblose Rückstand über Nacht am Hochvakuum getrocknet. Es wurden 174 g (74%) eines farblosen, wachsartigen, chromatographisch (UPLC) reinen Produktes erhalten.

### Beispiel 8

### Herstellung eines Additionsproduktes durch Addition von Natriumphosphinat an Di-[methyl-poly(oxyethylen)]maleat (Alkoxylierungsgrad: ca. 22 EO, Mw 1200- 1300 g/mol)

In einem Glasreaktor mit mechanischem Rührer, Thermometer und Tropftrichter wurden 43,2 g (0,4 mol) Natriumhypophosphit-monohydrat, gelöst in 300 g Wasser, vorgelegt und auf 65 °C erwärmt. Zu dieser Lösung wurden dann innerhalb von 70 Minuten eine Lösung von 228 g (0.2 mol) Di-[methyl-poly(oxyethylen)]maleat (Alkoxylierungsgrad: ca. 22 EO) und 2,0 g (0.009 mol) Natriumperoxodisulfat in 150 g Wasser zugetropft, wobei die Temperatur auf 73 °C anstieg. Anschliessend wurde noch 30 Minuten bei 70 °C nachreagiert bis flüssigchromatographisch nur noch Spuren von Maleinsäureester nachgewiesen werden konnten und dann die Reaktionslösung am Rotationsverdampfer bis zur Trockne eingedampft. Der Rückstand wurde in 500 g Isopropanol aufgenommen und diese Aufschlämmung 30 Minuten bei Raumtemperatur gerührt und dann über eine Nutsche abfiltriert. Der Filterkuchen, der zum grössten Teil aus überschüssigem Natriumhypophosphit besteht, wurde nun mit 80 ml Isopropanol gewaschen und die vereinigten Filtrate über 70 g wasserfreiem Natriumsulfat getrocknet. Das getrocknete Filtrat wurde durch einen Faltenfilter filtriert und zur Trockne eingedampft. Es wurden 230,6 g Rohprodukt erhalten.

Zur weiteren Reinigung wurde das stark hygroskopische Rohprodukt für zwei Stunden am Hochvakuum getrocknet und dann in 150 g Isopropanol gelöst und durch einen 10 µm-Filter filtriert. Das Filtrat wurde zur Trockne eingedampft und der farblose Rückstand über Nacht am Hochvakuum getrocknet. Es wurden 189.1 g (77%) eines farblosen, wachsartigen, hygroskopischen Produktes erhalten, das noch etwa 1.5 % nicht umgesetzten Maleinsäureester enthielt, was durch UPLC nachgewiesen werden konnte.

### Herstellung von Polymeren durch radikalische Polymerisation

### (Beispiele 9-12)

Die Abhängigkeit zwischen der Viskosität und der Molmasse wird durch die Staudinger-Mark-Houwink-Gleichung beschrieben und gilt für alle Typen gelöster Makromoleküle. Die Gleichung besagt, dass die Viskosität einer Polymerlösung dem mittleren Molekulargewicht des gelösten Polymers proportional ist.

Gestützt darauf lassen sich Lösungen von Polymeren, die aus den gleichen Monomeren in gleicher Konzentration aufgebaut sind, durch Messung der Viskosität direkt miteinander vergleichen. Der Vergleich erlaubt eine qualitative Aussage über den Polymerisationsgrad der Polymeren und somit über die Wirksamkeit des eingesetzten Reglers.

In den folgenden Beispielen wurden Polymerlösungen unter Verwendung eines erfindungsgemässen Reglers und gleiche Polymerlösungen unter Verwendung von Natriumphosphit, einem sehr schwachen Molekulargewichtsreglers, hergestellt und anhand ihrer Viskositäten miteinander verglichen. Der Viskositätsvergleich zeigt deutlich die überraschend hohe Wirksamkeit des erfindungsgemässen Molekulargewichtsreglers.

### Beispiel 9

Herstellung eines Co-polymers aus Methacrylsäure und Methyl-poly(oxyethylen)methacrylat (Alkoxylierungsgrad: ca. 22 EO) unter Verwendung von Natrium-3-[methyl-poly(oxyethylen)-oxy-] propylphosphinat (Alkoxylierungsgrad: 3-10 EO) gemäss Beispiel 1, als Molekulargewichtsregler.
Zulauf 1:
   775 g (ca. 0,5mol) Methyl-poly(oxyethylen)methacrylat (70-proz. in Wasser) 129 g (1,5 mol) Methacrylsäure
   100 g Wasser
Zulauf 2:
   10 g Natriumperoxodisulfat
   100 g Wasser
Zulauf 3:
   114 g (ca. 0,2mol) Natrium-3-[methyl-poly(oxyethylen)] propylphophinat (70-proz. in Wasser)
   50 g Wasser

In einem 3 Liter fassenden 4-Hals-Rundkolben, versehen mit Thermometer, Ankerrührer mit kühlbarem Rührverschluss, 40 cm-Kugelkühler und kühlbarem Einleitungsrohr für Zuläufe mit automatischen Dosiervorrichtungen wurden 450 g Wasser vorgelegt und auf 80 °C erhitzt. Anschliessend werden 10 % von Zulauf 2 und 10 % von Zulauf 3 zur Vorlage gegeben. Nun werden Zulauf 1 in 3 Stunden sowie die Zuläufe 2 und 3 gleichzeitig in 190 min unter Rühren zugetropft und die Temperatur auf 95° C gehalten. Nach beendigter Zugabe der Zuläufe wurde noch 30 min bei 95 °C nachreagiert bis kein Peroxid mehr nachweisbar war und dann gekühlt. Es wurde eine klare, farblose Polymerlösung mit einem Feststoffgehalt von 39.6% und einer Viskosität von 362 mPa·s erhalten.

### Beispiel 10 (Vergleichsbeispiel 1)

Es wurde ein Copolymer analog Beispiel 9 mit dem Unterschied hergestellt, dass anstelle des erfindungsgemässen Molekulargewichtsreglers eine äquimolare Menge Natriumphosphit eingesetzt wurde.

Es wurde eine klare, farblose Polymerlösung mit einem Feststoffgehalt von 39,8 % und einer Viskosität von 811 mPa·s erhalten.

### Beispiel 11

Herstellung eines Copolymers aus Polyethylenglykol-monovinylether, Acrylsäure und Hydroxypropylacrylat unter Verwendung von Natrium-3-[methyl-poly(oxethylen)] propylphosphinat gemäss Beispiel 1 als Molekulargewichtsregler.
Vorlage:
   300 g Wasser
   200 g (0,05 mol) Polyethylenglykol-monovinylether (Monomer 1)
   11,4 g (ca. 0,02 mol) Natrium-3-[methyl-poly(oxyethylen)-oxy-] propylphosphinat
   2 g NaOH (50-proz.)
   1 g FeSO₄ .7H₂O (10-proz.)
Zulauf 1:
   50 g Wasser
   7.2 g (0,1 mol) Acrylsäure
   23,4 g (0,18 mol) Hydroxypropylacrylat
Zugabe A:
   1,2 g Rongalit (Na-Formaldehyd-Sulfoxylat)
   10 g Wasser
Zugabe B:
   2,2 g Wasserstoffperoxyd (35-proz.)
   10 g Wasser

In einem 2 Liter fassenden 4-Hals-Rundkolben, versehen mit Thermometer, Ankerrührer mit kühlbarem Rührverschluss, 40 cm-Kugelkühler und kühlbarem Einleitungsrohr für Zuläufe mit automatischen Dosiervorrichtungen wurde die Vorlage, welche das Monomer 1 und den Regler enthält, so lange gerührt bis sich der Vinylether vollständig gelöst hatte. Dann wurden 29 g Zulauf 1 zur Vorlage gegeben und gut gemischt. Anschliessend wird Zugabe A zum Zulauf 1 hinzugefügt und gemischt. Nun wurde Zugabe B in die gerührte Vorlage gegeben und gleichzeitig der die Zugabe A enthaltende Zulauf 1 in 6,5 Minuten zur Vorlage zugetropft. Dabei stieg die Temperatur von 21,3 auf 30,1 °C und nach 13 Minuten wurde ein Temperaturmaximum von 31,7 °C erreicht. Nun wurde noch 15 Minuten weiter gerührt bis kein Peroxid mehr nachgewiesen werden konnte. Es wurde eine klare Polymerlösung mit einem Feststoffgehalt von 37,9% erhalten. Nach Verdünnung der Polymerlösung auf einen Feststoffgehalt von 10% wurde eine Viskosität von 23 mPa·s gemessen.

### Beispiel 12 (Vergleichsbeispiel 2)

Herstellung eines Copolymers analog Beispiel 11 mit dem Unterschied, dass anstelle des erfindungsgemässen Molekulargewichtsreglers eine äquimolare Menge Natriumphosphit eingesetzt wurde.

Es wurde eine klare, hochviskose Polymerlösung erhalten. Nach Verdünnen der Polymerlösung auf einen Feststoffgehalt von 10% wurde eine Viskosität von 114 mPa·s gemessen.

### Beispiel 13 (Vergleichsbeispiel 3)

Herstellung eines Copolymers analog Beispiel 11 mit dem Unterschied, dass kein Molekulargewichtsregler eingesetzt wurde.

Die Viskosität stieg im Lauf der Polymerisation stark an. Nach beendeter Reaktion wurde ein Hydrogel erhalten, das sich nicht mehr verdünnen liess.

## Patentansprüche

1. Monosubstituierte Phosphinsäure der Formel (I) 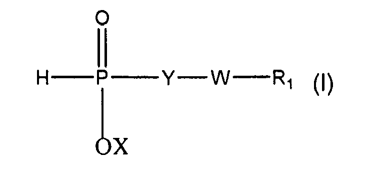 wobei **X** für H⁺, Alkalimetallion, Erdalkalimetallion, zwei- oder dreiwertiges Metallion, Ammoniumion, organische Ammoniumgruppe oder einen organischen Rest mit einem Molekulargewicht von ≤ 200 g/mol steht, insbesondere für Na⁺ oder K⁺ steht;
wobei **Y** für eine der Formeln (II) bis (VI) steht 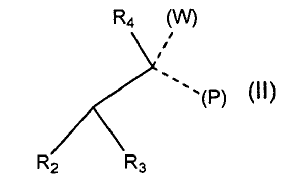 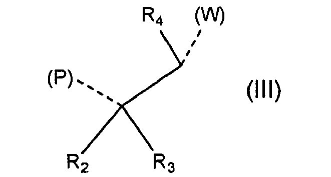 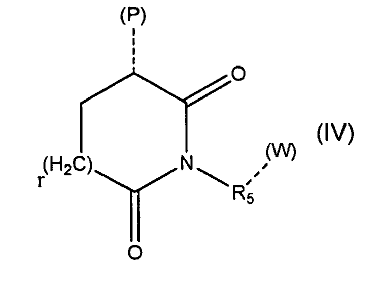 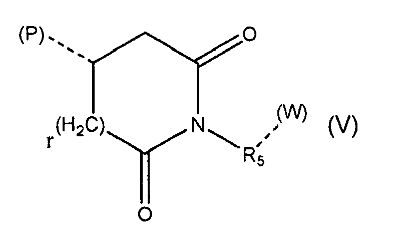 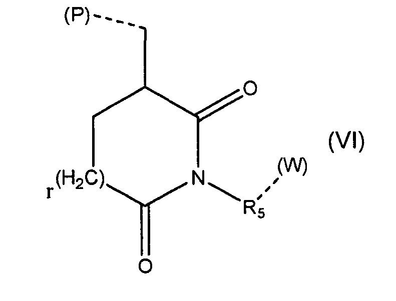 wobei **W** für eine der Formeln (VII) bis (X) steht; 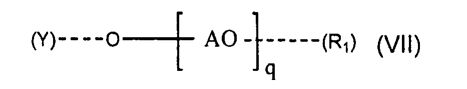 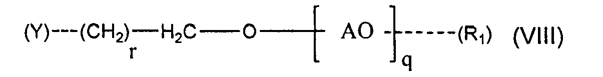 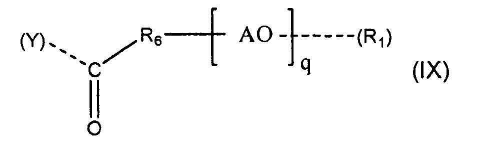 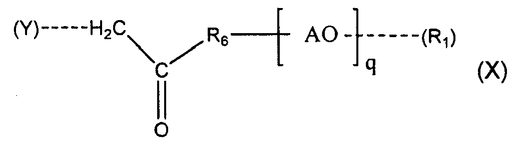 wobei R₁ für H, eine Alkylgruppe, vorzugsweise mit 1 bis 20 C-Atomen, eine Alkylarylgruppe, vorzugsweise mit 7 bis 20 C-Atomen, oder die Formel (XI) steht 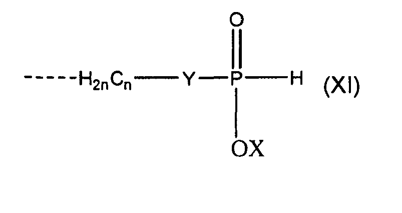 wobei der Substituent A unabhängig voneinander für eine C₂- bis C₄-Alkylengruppe steht, der Index q einen Wert von 2 bis 300, insbesondere von 2 bis 50, besonders bevorzugt von 3 bis 10, darstellt, der Index n einen Wert von 2 bis 4, vorzugsweise einen Wert von 2, darstellt, der Index r einen Wert von 0 bis 1 darstellt,
wobei R₂, R₃ und R₄ unabhängig voneinander für H, CH₃, COOH oder CH₂-COOH stehen,
R₅ für -CH₂-CH₂- oder -CH₂-CH(CH₃)- und
R₆ für O oder N steht.

2. Verfahren zur Herstellung einer monosubstituierten Phosphinsäure durch Umsetzung einer Phosphinsäure der Formel (XII) 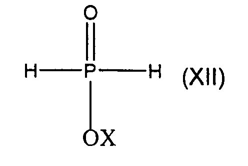 mit einer Verbindung der Formel (XIII)
Y'-W-R₁ (XIII)
wobei **Y'** für eine Verbindung der Formel (III') bis (VI') steht 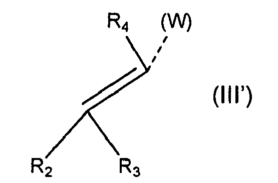 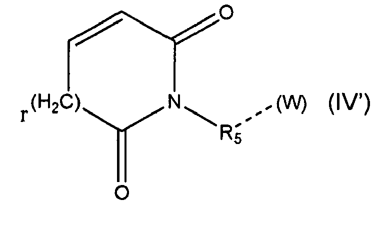 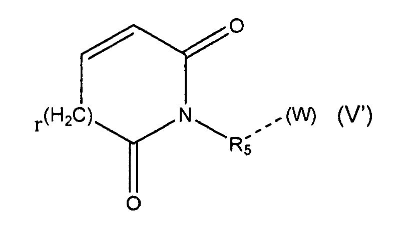 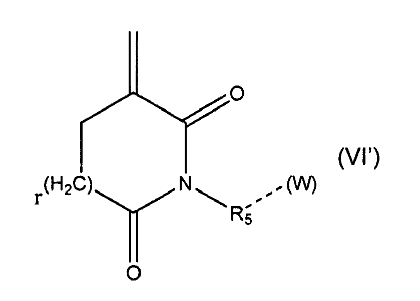 und wobei **W,** R₁-R₅, **X** und r für Reste, respektive Index, stehen, wie sie in Anspruch 1 beschrieben sind, in Gegenwart eines Radikalinitiators.

3. Verfahren gemäss Anspruch 2, **dadurch gekennzeichnet, dass** es sich bei der Phosphinsäure der Formel (XII) um Natriumphosphinatmonohydrat handelt.

4. Verfahren gemäss einem der Ansprüche 2 oder 3, **dadurch gekennzeichnet, dass** das Verfahren folgende Schritte umfasst:
a) eine radikalische Additionsreaktion der Phosphinsäure der Formel (XII) mit einer Verbindung der Formel (XIII) und einem Radikalinitiator in einem Lösungsmittel;
b) gegebenenfalls Entfernung des Lösungsmittels, insbesondere durch Destillation, aus dem Reaktionsgemisch und gegebenenfalls Reinigung des Reaktionsprodukts aus dem Reaktionsgemisch.

5. Verfahren gemäss einem der Ansprüche 2 - 4, **dadurch gekennzeichnet, dass** das molare Verhältnis der Verbindung der Formel (XIII) zur Phosphinsäure der Formel (XII) 1:1 bis 1:10, bevorzugt 1:2 bis 1:6 beträgt.

6. Verfahren gemäss einem der Ansprüche 2 - 5, **dadurch gekennzeichnet, dass** das Verfahren ein Lösungsmittel aufweist, welches Wasser ist oder eine wässrige Lösung eines Lösungsmittels ausgewählt aus der Gruppe bestehend aus Ethanol, Methanol und Isopropanol, vorzugsweise ist das Lösungsmittel Wasser.

7. Verwendung einer monosubstituierten Phosphinsäure der Formel (I) gemäss Anspruch 1 als Molekulargewichtsregler bei radikalischen Polymerisationen.

8. Verwendung einer monosubstituierten Phosphinsäure hergestellt durch ein Verfahren gemäss einem der Ansprüche 2 bis 6 als Molekulargewichtsregler bei radikalischen Polymerisationen.

9. Verfahren zur Herstellung von Polymeren **P** durch radikalische Polymerisation von Monomeren **M** unter Verwendung einer monosubstituierten Phosphinsäure der Formel (I) gemäss Anspruche 1 oder einer monosubstituierten Phosphinsäure hergestellt durch ein Verfahren gemäss einem der Ansprüche 2 bis 6.

10. Verfahren gemäss Anspruch 9, **dadurch gekennzeichnet, dass** die Monomere **M** ausgewählt sind aus der Gruppe bestehend aus:
• monoethylenisch ungesättigten (C₃-C₆)-Mono- und Dicarbonsäuren,
• (C₁-C₂₀)-(Meth-)Alkylacrylaten, (C₁-C₂₀)-(Meth-)Alkylacrylamiden, (C₁-C₂₀)-(Meth-)Alkylacrylnitrilen und Poly(oxyalkylen)(meth-)acrylaten,
• Vinylestern von bis zu 20 C-Atome enthaltenden Carbonsäuren, Vinylaromaten mit bis zu 20C-Atomen,
• Vinylethern und Allylethern von 1 bis 12 C-Atomen enthaltenden Alkoholen, Methyl-poly(oxyalkylen)-allylethern, Methyl-poly(oxyalkylen)vinylethern,
• aliphatischen Kohlenwasserstoffen mit 2 bis 10 C-Atomen und 1 oder 2 olefinischen Doppelbindungen, cyclischen und offenkettigen N-Vinylamiden,
• und Mischungen dieser Monomeren.

11. Verfahren gemäss einem der Ansprüche 9 oder 10, **dadurch gekennzeichnet, dass** die radikalische Polymerisation in Wasser ausgeführt wird.

12. Verfahren gemäss einem der Ansprüche 9 oder 10, **dadurch gekennzeichnet, dass** die radikalische Polymerisation in Gegenwart von mindestens einem organischen Lösemittel durchgeführt wird und die monosubstituierte Phosphinsäure einen Anteil von ≥ 70 Gew.-% Oxypropylen (PO)- oder Oxybutylengruppen (BO) aufweist, bezogen auf das Molekulargewicht der monosubstituierte Phosphinsäure, wobei der Anteil des organischen Lösemittels 5 - 90 Gew.-% beträgt, bezogen auf das Gesamtgewicht des Lösungsmittels.

13. Verfahren gemäss einem der Ansprüche 9 oder 10, **dadurch gekennzeichnet, dass** die radikalische Polymerisation in Gegenwart von Wasser durchgeführt wird und die monosubstituierte Phosphinsäure einen Anteil von ≥ 50 Gew.-% Ethylengruppen (EO) aufweist, bezogen auf das Molekulargewicht der monosubstituierte Phosphinsäure, wobei der Anteil von Wasser 50 - 100 Gew.-% beträgt, bezogen auf das Gesamtgewicht des Lösungsmittels.

14. Verfahren gemäss einem der Ansprüche 9 -13, **dadurch gekennzeichnet, dass** die Polymere **P** hergestellt durch die radikalische Polymerisation ein Molekulargewicht von 500-200'000 g/mol, vorzugsweise 2'000-50'000 g/mol, aufweisen.

15. Polymer der Formel (XIV) 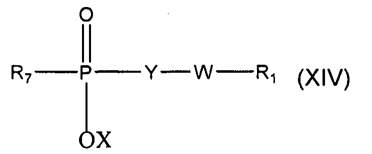 wobei **X, Y, W**, R₁ für Reste stehen, wie sie in Anspruch 1 beschrieben sind;
und R₇ für ein Polymer umfassend mindestens ein Monomer **M**, wie sie in Anspruch 10 erwähnt sind, in polymerisierten Zustand steht, wobei R₇ ein Molekulargewicht von 500-200'000 g/mol, vorzugsweise 2'000-50'000 g/mol aufweist.

## Claims

1. Monosubstituted phosphinic acid of formula (I) 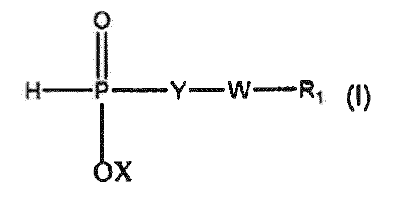 wherein X represents H⁺, an alkali metal ion, an alkaline-earth metal ion, a divalent or trivalent metal ion, an ammonium ion, an organic ammonium group or an organic residue having a molecular weight of ≤ 200 g/mol, more particularly represents Na⁺ or K⁺,
wherein **Y** represents one of formulae (II) to (VI) 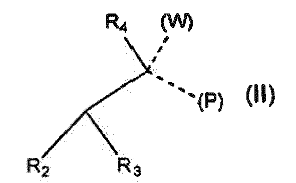 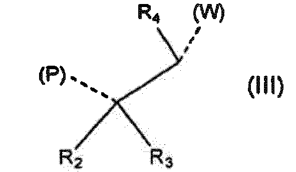 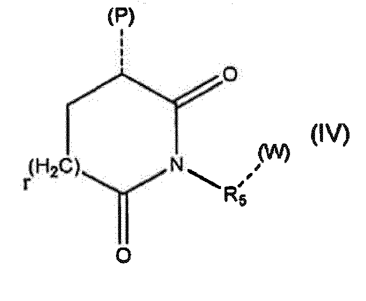 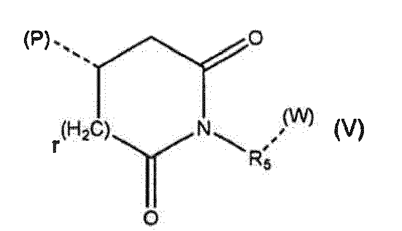 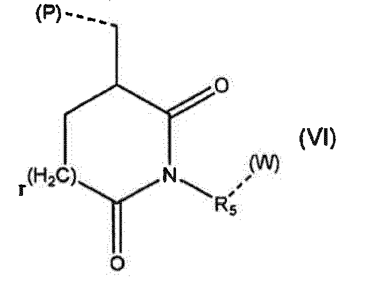 wherein **W** represents one of formulae (VII) to (X); 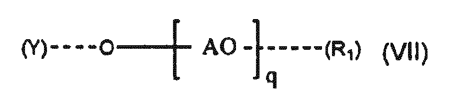 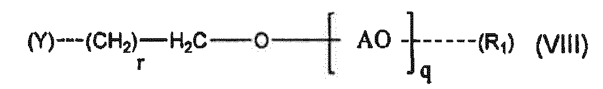 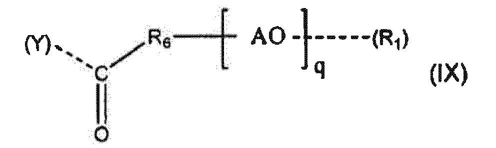 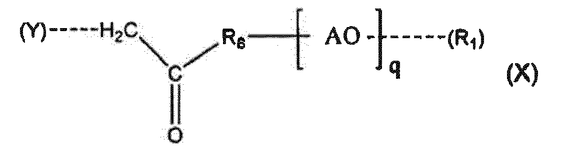 wherein R₁ represents H, an alkyl group, preferably having 1 to 20 C atoms, an alkylaryl group, preferably having 7 to 20 C atoms, or formula (XI) 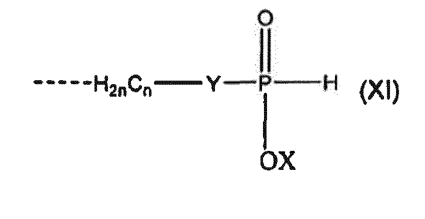 wherein the substituent A, mutually independently, represents a C₂ to C₄ alkylene group, the index q represents a value of from 2 to 300, more particularly of from 2 to 50, more preferably of from 3 to 10, the index n represents a value of from 2 to 4, preferably a value of 2, the index r represents a value of from 0 to 1,
wherein R₂, R₃ and R₄ mutually independently represent H, CH₃, COOH or CH₂-COOH,
R₅ represents -CH₂-CH₂- or -CH₂-CH(CH₃)- and
R₆ represents O or N.

2. Method for producing a monosubstituted phosphinic acid by reacting a phosphinic acid of formula (XII) 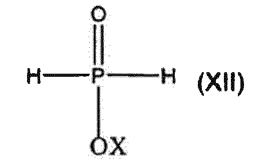 with a compound of formula (XIII)
**Y'-W-R₁** (XIII)
wherein Y' represents a compound of formula (III') to (VI') 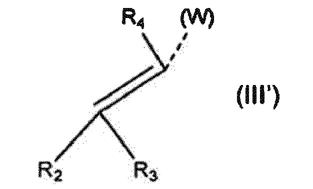 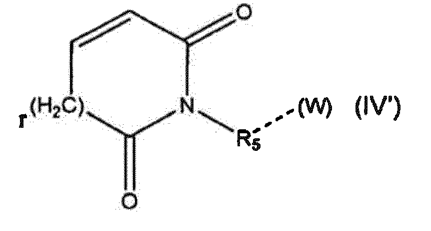 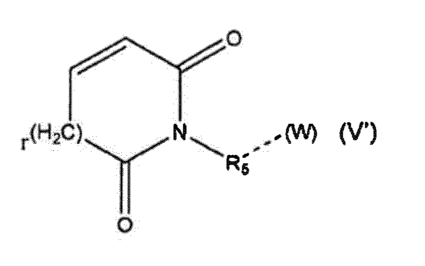 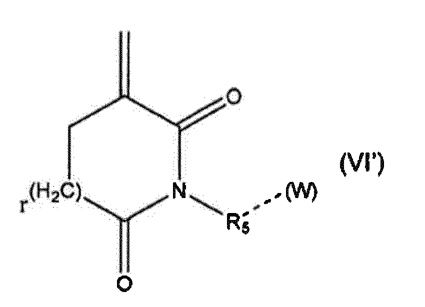 and wherein **W**, R₁-R₅, **X** and r represent residues and an index respectively, as described in claim 1, in the presence of a radical initiator.

3. Method according to claim 2, **characterised in that** the phosphinic acid of formula (XII) is sodium phosphinate monohydrate.

4. Method according to either claim 2 or claim 3, **characterised in that** the method comprises the following steps:
a) a radical addition reaction of the phosphinic acid of formula (XII) with a compound of formula (XIII) and a radical initiator in a solvent;
b) optionally, removal of the solvent, in particular by distillation, from the reaction mixture and, optionally, purification of the reaction product from the reaction mixture.

5. Method according to any of claims 2 to 4, **characterised in that** the molar ratio of the compound of formula (XIII) to the phosphinic acid of formula (XII) is 1:1 to 1:10, preferably 1:2 to 1:6.

6. Method according to any of claims 2 to 5, **characterised in that** the method includes a solvent which is water or an aqueous solution of a solvent selected from the group consisting of ethanol, methanol and isopropanol, the solvent preferably being water.

7. Use of a monosubstituted phosphinic acid of formula (I) according to claim 1 as a molecular weight regulator in radical polymerisation.

8. Use of a monosubstituted phosphinic acid produced by means of a method according to any of claims 2 to 6 as a molecular weight regulator in radical polymerisation.

9. Method for producing polymers P by radical polymerisation of monomers **M** using a monosubstituted phosphinic acid of formula (I) according to claim 1 or a monosubstituted phosphinic acid produced by means of a method according to any of claims 2 to 6.

10. Method according to claim 9, **characterised in that** the monomers **M** are selected from the group consisting of:
• monoethylenically unsaturated (C₃-C₆)-monocarboxylic and dicarboxylic acids,
• (C₁-C₂₀)-(meth)alkyl acrylates, (C₁-C₂₀)-(meth)alkyl acrylamides, (C₁-C₂₀)-(meth)alkyl acrylonitriles and poly(oxyalkylene)(meth)acrylates,
• vinyl esters of carboxylic acids containing up to 20 C atoms, vinyl aromatics having up to 20 C atoms,
• vinyl ethers and allyl ethers of alcohols containing 1 to 12 C atoms, methyl poly(oxyalkylene) allyl ethers, methyl poly(oxyalkylene) vinyl ethers,
• aliphatic hydrocarbons having 2 to 10 C atoms and 1 or 2 olefinic double bonds, cyclic and open-chain N-vinyl amides,
• and mixtures of said monomers.

11. Method according to either claim 9 or claim 10, **characterised in that** the radical polymerisation is carried out in water.

12. Method according to either claim 9 or claim 10, **characterised in that** the radical polymerisation is carried out in the presence of at least one organic solvent and the monosubstituted phosphinic acid has a proportion of ≥ 70 % by weight oxypropylene groups (PO) or oxybutylene groups (BO) based on the molecular weight of the monosubstituted phosphinic acid, the proportion of organic solvent being 5-90 % by weight based on the total weight of the solvent.

13. Method according to either claim 9 or claim 10, **characterised in that** the radical polymerisation is carried out in the presence of water and the monosubstituted phosphinic acid has a proportion of ≥ 50 % by weight ethylene groups (EO) based on the molecular weight of the monosubstituted phosphinic acid, the proportion of water being 50-100 % by weight based on the total weight of the solvent.

14. Method according to any of claims 9 to 13, **characterised in that** the polymers **P** which are produced by the radical polymerisation have a molecular weight of 500-200,000 g/mol, preferably 2,000-50,000 g/mol.

15. Polymer of formula (XIV) 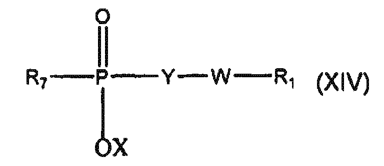 wherein **X, Y, W**, R₁ represent residues, as described in claim 1;
and R₇ represents a polymer comprising at least one monomer **M**, as mentioned in claim 10, in a polymerised state, R₇ having a molecular weight of 500-200,000 g/mol, preferably 2,000-50,000 g/mol.

## Revendications

1. Acide phosphinique monosubstitué de formule (I) : 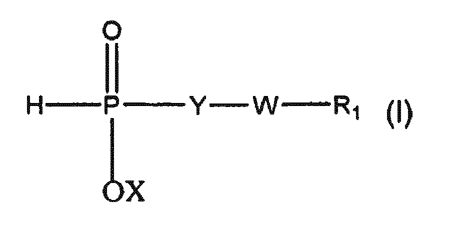 dans laquelle X désigne H⁺, un ion de métal alcalin, un ion de métal alcalinoterreux, un ion de métal bivalent ou trivalent, un ion d'ammonium, un groupement ammonium organique ou un radical organique avec un poids moléculaire ≤ 200 g/mole, en particulier Na⁺ ou K⁺ ;
dans laquelle Y correspond à l'une des formules (II) à (VI) : 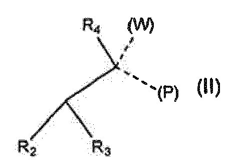 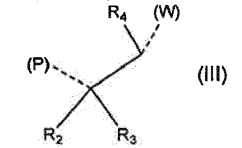 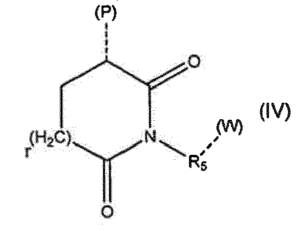 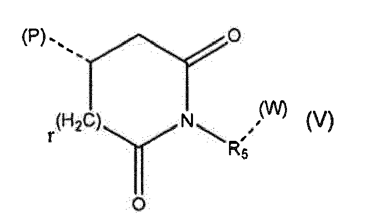 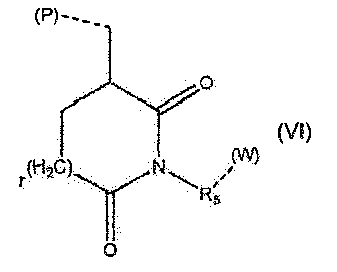 dans lesquelles **W** correspond à l'une des formules (VII) à (X) : 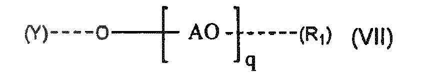 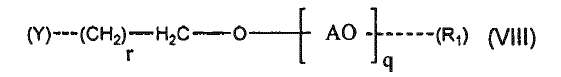 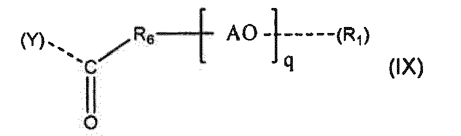 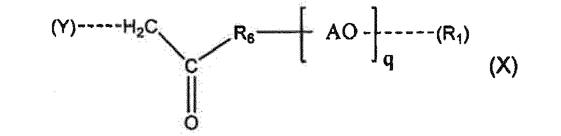 dans lesquelles R₁ désigne H, un groupement alkyle, de préférence avec 1 à 20 atomes de carbone, un groupement alkylaryle, de préférence avec 7 à 20 atomes de carbone, ou la formule (XI) suivante : 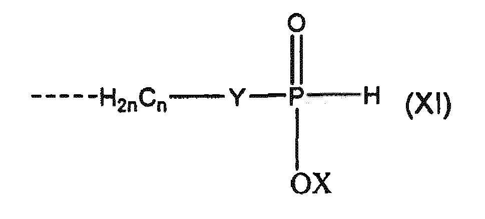 dans laquelle le substituant A désigne, indépendamment l'un de l'autre, un groupement alkylène en C₂-C₄, l'indice q présente une valeur de 2 à 300, en particulier de 2 à 50, tout particulièrement une valeur de 3 à 10, l'indice n présente une valeur de 2 à 4, de préférence de 2, l'indice r présente une valeur de 0 à 1,
dans laquelle R₂, R₃ et R₄ désignent, indépendamment l'un de l'autre, H, CH₃, COOH ou CH₂-COOH,
R₅ désigne -CH₂-CH₂- ou -CH₂-CH(CH₃)- et
R₆ désigne O ou N.

2. Procédé de fabrication d'un acide phosphinique monosubstitué par réaction d'un acide phosphinique de formule (XII) : 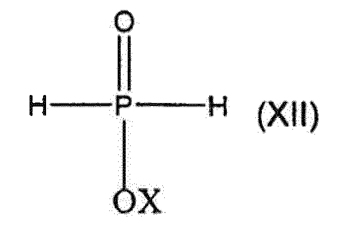 avec un composé de formule (XIII) :
**Y'-W-R₁** (XIII)
dans laquelle Y' désigne un composé de formules (III') à (VI') : 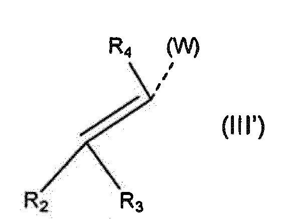 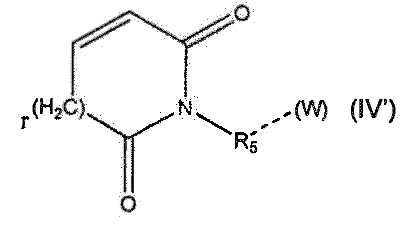 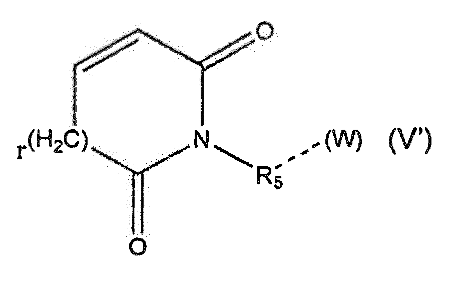 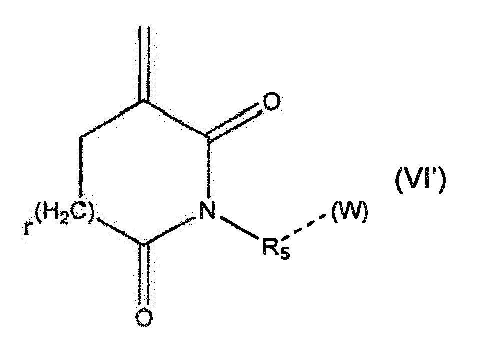 et dans lesquelles **W**, R₁-R₅, **X** et r désignent des radicaux ou des indices respectifs tels que décrits dans la revendication 1 en présence d'un initiateur de radicaux.

3. Procédé selon la revendication 2, **caractérisé en ce que** l'acide phosphinique de formule (XII) est le phosphinate de sodium monohydraté.

4. Procédé selon l'une quelconque des revendications 2 ou 3, **caractérisé en ce que** le procédé comprend les étapes suivantes :
a) une réaction d'addition radicalaire de l'acide phosphinique de formule (XII) avec un composé de formule (XIII) et un initiateur de radicaux dans un solvant ;
b) éventuellement l'élimination du solvant, en particulier par distillation, du mélange réactionnel et éventuellement la purification du produit réactionnel provenant du mélange réactionnel.

5. Procédé selon l'une quelconque des revendications 2 à 4, **caractérisé en ce que** le rapport molaire du composé de formule (XIII) à l'acide phosphinique de formule (XII) atteint 1:1 à 1:10, de préférence 1:2 à 1:6.

6. Procédé selon l'une quelconque des revendications 2 à 5, **caractérisé en ce que** le procédé présente un solvant qui est de l'eau ou une solution aqueuse d'un solvant choisi dans le groupe constitué de l'éthanol, du méthanol et de l'isopropanol, le solvant était de préférence de l'eau.

7. Utilisation d'un acide phosphinique monosubstitué, de formule (I) selon la revendication 1 comme régulateur de poids moléculaire dans les polymérisations radicalaires.

8. Utilisation d'un acide phosphinique monosubstitué fabriqué par un procédé selon l'une quelconque des revendications 2 à 6 comme régulateur de poids moléculaire dans des polymérisations radicalaires.

9. Procédé de fabrications de polymères **P** par polymérisation radicalaire de monomères **M** en utilisant un acide phosphinique monosubstitué de formule (I) selon la revendication 1 ou un acide phosphinique monosubstitué fabriqué par un procédé selon l'une quelconque des revendications 2 à 6.

10. Procédé selon la revendication 9, **caractérisé en ce que** les monomères **M** sont choisis dans le groupe constitué des suivants :
• acides mono- et dicarboxyliques en C₃-C₆ à insaturation monoéthylénique,
• (méth)acrylates d'alkyle en C₁-C₂₀, (méth)acrylamides d'alkyle en C₁-C₂₀, (méth)acrylonitriles d'alkyle en C₁-C₂₀ et poly((méth)acrylates d'oxyalkylène),
• esters vinyliques d'acides carboxyliques contenant jusqu'à 20 atomes de carbone, vinylaromatiques avec jusqu'à 20 atomes de carbones,
• éthers vinyliques et éthers allyliques d'alcools contenant 1 à 12 atomes de carbone, poly(allyléthers d'oxyalkylène) de méthyle, poly(vinyléthers d'oxyalkylène) de méthyle,
• hydrocarbures aliphatiques avec 2 à 10 atomes de carbone et 1 ou 2 double liaison oléfiniques, N-vinylamides cycliques et à chaîne ouverte,
• et mélanges de ces monomères.

11. Procédé selon l'une quelconque des revendications 9 ou 10, **caractérisé en ce que** la polymérisation radicalaire est effectuée dans de l'eau.

12. Procédé selon l'une quelconque des revendications 9 ou 10, **caractérisé en ce que** la polymérisation radicalaire se fait en présence d'au moins un solvant organique et l'acide phosphinique monosubstitué présente une fraction ≥ 70 % en poids de groupements oxypropylène (PO) ou oxybutylène (BO), par rapport au poids moléculaire de l'acide phosphinique monosubstitué, dans lequel la fraction du solvant organique est de 5 à 90 % en poids par rapport au poids total du solvant.

13. Procédé selon l'une quelconque des revendications 9 ou 10, **caractérisé en ce que** la polymérisation radicalaire se fait en présence d'eau et l'acide phosphinique monosubstitué présente une fraction ≥ 50 % en poids de groupements éthylène (EO) par rapport au poids moléculaire de l'acide phosphinique monosubstitué, dans lequel la fraction d'eau est de 50 à 100 % en poids par rapport au poids total du solvant.

14. Procédé selon l'une quelconque des revendications 9 à 13, **caractérisé en ce que** les polymères P fabriqués par la polymérisation radicalaire présentent un poids moléculaire de 500 à 200'000 g/mole, de préférence de 2'000 à 50'000 g/mole.

15. Polymère de formule (XIV) : 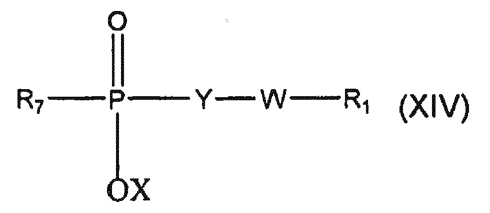 dans laquelle **X, Y, W**, R₁ désignent des radicaux comme décrits dans la revendication 1, et
R₇ désigne un polymère comprenant au moins un monomère **M** comme décrit dans la revendication 10, à l'état polymérisé, R₇ présentant un poids moléculaire de 500 à 200'000 g/mole, de préférence de 2'000 à 50'000 g/mole.
